# EUROPÄISCHE PATENTSCHRIFT

(11) **EP 3 482 618 B1**
(45) Veröffentlichungstag und Bekanntmachung des Hinweises auf die Patenterteilung: **08.04.2020**
(21) Anmeldenummer: 18000831.0
(22) Anmeldetag: 26.10.2018
(51) Int. Cl.: A01C 15/00, A01C 21/00, B64D 1/16, B64D 1/22, B64C 39/02, A01C 17/00

(54) **LANDWIRTSCHAFTLICHE VERTEILMASCHINE AUF DER BASIS EINES AUTONOMEN FLUGGERÄTES UND BEFÜLL- UND LADESTATION FÜR EINE SOLCHE VERTEILMASCHINE**
AGRICULTURAL DISTRIBUTOR ON THE BASIS OF AN AUTONOMOUS AIRCRAFT AND FILLING AND CHARGING STATION FOR SUCH A DISTRIBUTOR
MACHINE D'ÉPANDAGE AGRICOLE À BASE D'UN ENGIN VOLANT AUTONOME ET STATION DE REMPLISSAGE ET DE CHARGE POUR UNE TELLE MACHINE D'ÉPANDAGE

(30) Priorität: 08.11.2017 DE 102017010319
(43) Veröffentlichungstag der Anmeldung: 15.05.2019
(73) Patentinhaber: RAUCH Landmaschinenfabrik GmbH, 76547 Sinzheim (DE)
(72) Erfinder: Stöcklin, Volker, 77975 Ringsheimn (DE); Rauch, Norbert, 01326 Dresden (DE)
(74) Vertreter: Lichti - Patentanwälte Partnerschaft mbB

(56) Entgegenhaltungen:
- WO-A1-2016/078093
- US-A1- 2015 181 819
- US-A1- 2016 307 448
- US-A1- 2017 029 099

## Beschreibung

Die Erfindung betrifft eine landwirtschaftliche Verteilmaschine zum automatisierten Ausbringen von Verteilgütern, umfassend ein autonomes Fluggerät mit einer Mehrzahl von an einem Fluggeräterahmen drehbar gelagerten und elektromotorisch angetriebenen Propellern, wenigstens einem wiederaufladbaren Stromspeicher, einer Positionserfassungseinrichtung, einer Steuer- und/oder Regeleinrichtung, wenigstens einem Vorratsbehälter, wenigstens einem Dosierorgan und wenigstens einem Verteilorgan. Die Erfindung bezieht sich ferner auf eine Befüll- und Ladestation für eine solche landwirtschaftliche Verteilmaschine sowie auf ein landwirtschaftliches Verteilsystem zum automatisierten Ausbringen von Verteilgütern mit einer landwirtschaftlichen Verteilmaschine und einer Befüll- und Ladestation der vorgenannten Art.

Landwirtschaftliche Verteilmaschinen sind in vielerlei Ausgestaltung bekannt. Beispielhaft seien in diesem Zusammenhang zum Ausbringen von pulver- oder partikelförmigem Verteilgut, wie z.B. Dünger, Saatgut, Kalk oder dergleichen, geeignete Scheibenstreuer, pneumatische Düngerstreuer und Sämaschinen einschließlich Drillmaschinen oder auch zum Ausbringen von flüssigem Verteilgut geeignete Feldspritzen erwähnt. Derartige Verteilmaschine stehen üblicherweise in Form von Anbaugeräten, welche vom Dreipunkt-Kraftheber eines Traktors aufgenommen werden können, oder von angetriebenen oder geschleppten Selbstfahrern zur Verfügung.

In jüngerer Zeit gehen Bestrebungen dahin, anstelle von solchen Anbaugeräten oder Selbstfahrern auch als "Drohnen" bezeichnete autonome Fluggeräte mit einer Mehrzahl von an einem Fluggeräterahmen drehbar gelagerten und elektromotorisch angetriebenen Propellern vorzusehen, welche den Vorteil besitzen, dass sie auch in schwierigem Gelände, wie beispielsweise in verhältnismäßig steilen Hanglagen oder auf relativ kleinen "verwinkelten" Feldern sowie auf verkehrstechnisch nur schlecht erschlossenen Feldern relativ problemlos eingesetzt werden können und zudem nicht die Anlage von Fahrgassen auf dem Feld erfordern. Ähnlich wie es bei modernen Verteilmaschinen nach Art von Anbaugeräten oder Selbstfahrern der Fall ist, verfügt das autonome Fluggerät dabei über ein Positionserfassungssystem, z.B. nach Art eines GPS-Systems, sowie über eine Steuer- und/oder Regeleinrichtung, so dass das autonome Fluggerät nach entsprechender Programmierung entlang seiner Arbeitsbreite entsprechenden "Fahrgassen" selbsttätig das zu bestellende Feld abfliegen und das Verteilgut auszubringen vermag. Ein das jeweilige Verteilgut - sei es pulver- bzw. partikelförmig oder sei es flüssig - aufnehmender Vorratsbehälter ist dabei ebenso an dem Fluggeräterahmen festgelegt wie ein an das auszubringende Verteilgut angepasstes Dosierorgan (wie beispielsweise in Form eines Dosierschiebers, eines Dosierrades, wie eines Nocken- oder Zellenrades, einer Pumpe oder dergleichen) und ein gleichfalls an das Dosierorgan angepasstes Verteilorgan (wie beispielsweise in Form einer Verteilerscheibe, einer Mehrzahl an Düsen oder dergleichen). Das oder die Dosierorgan(e) sowie vorzugsweise auch das oder die Verteilorgan(e) stehen hierbei zweckmäßigerweise gleichfalls mit der Steuer- und/oder Regeeinrichtung in Wirkverbindung, um das Verteilgut gemäß einer elektronischen Feldkarte, wie einer Applikationskarte, entsprechend dem jeweiligen lokalen Bedarf auf dem Feld zu verteilen. Ein derartiges autonomes Fluggerät ist z.B. unter dem Handelsnamen "Agronator" (siehe auch unter www.agronator.com) kommerziell erhältlich.

Darüber hinaus ist es bekannt, mit Sensoren ausgestattete autonome Fluggeräte nach Art von Drohnen in Verbindung mit landwirtschaftlichen Arbeitsfahrzeugen einzusetzen, wobei die Drohnen zur Erkundung des Feldes dienen und über Kabel oder drahtlos mit dem Arbeitsfahrzeug kommunizieren (vgl. z.B. die DE 10 2016 202 627 A1 oder DE 10 2016 202 628 A1).

Ein Nachteil von derartigen landwirtschaftlichen Verteilmaschinen auf der Basis von autonomen Fluggeräten besteht grundsätzlich in der begrenzten Kapazität der zur Stromversorgung der Elektromotoren der Propeller sowie auch zur Betätigung der Dosierorgane und gegebenenfalls der Verteilorgane dienenden wiederaufladbaren Stromspeicher, bei welchen es sich in aller Regel um handelsübliche Akkumulatoren handelt. Dies umso mehr, als eine solche landwirtschaftliche Verteilmaschine aufgrund des in dem Vorratsbehälter mitgeführten Verteilgutes zum Tragen erheblicher Lasten geeignet sein muss. Letzteres bedingt wiederum ein nur begrenztes Aufnahmevolumen des Vorratsbehälters, welcher im befüllten Zustand der maximalen Traglast des autonomen Fluggerätes genügen muss. Dies resultiert in der Praxis in relativ häufigen Unterbrechungen der Verteilarbeit, um einerseits den leeren Vorratsbehälter wieder mit frischem Verteilgut zu befüllen, andererseits den erschöpften Stromspeicher wieder aufzuladen. Folglich ergeben sich nicht nur in regelmäßigen Zeitabständen verhältnismäßig lange Stillstandszeiten der Verteilmaschine, sondern ist stets ein Bediener erforderlich, welcher den Behälter neu befüllt und den Stromspeicher auflädt.

US 2016/307448 A1 offenbart eine landwirtschaftliche Verteilmaschine nach dem Oberbegriff des Anspruchs 1, deren wiederaufladbarer Stromspeicher an einer Befüll- und Ladestation automatisiert ausgetauscht wird.

Der Erfindung liegt die Aufgabe zugrunde, eine landwirtschaftliche Verteilmaschine zum automatisierten Ausbringen von Verteilgütern der eingangs genannten Art unter zumindest weitestgehender Vermeidung der vorgenannten Nachteile auf einfache und kostengünstige Weise dahingehend weiterzubilden, dass Stillstandszeiten während der Verteilarbeit minimiert werden und vorzugsweise auch die ständige Anwesenheit von Bedienpersonal weitgehend entbehrlich wird. Sie ist ferner auf eine Befüll- und Ladestation für eine derartige landwirtschaftliche Verteilmaschine, welche insbesondere eine automatisierte Befüllung des Vorratsbehälters sowie eine automatisierte Aufladung des wiederaufladbaren Stromspeichers gewährleistet, sowie auf ein sowohl eine solche Befüll- und Ladestation als auch eine solche landwirtschaftliche Verteilmaschine umfassendes Verteilsystem gerichtet.

Der erste Teil dieser Aufgabe wird erfindungsgemäß bei einer landwirtschaftlichen Verteilmaschine zum automatisierten Ausbringen von Verteilgütern der eingangs genannten Art dadurch gelöst, dass
- einerseits der Vorratsbehälter, das wenigstens eine Dosierorgan und das wenigstens eine Verteilorgan, andererseits der wenigstens eine wiederaufladbare Stromspeicher an einer separaten Trageinheit angeordnet sind;
- die Trageinheit mittels wenigstens einer automatischen Kopplungseinrichtung mit dem Fluggeräterahmen koppelbar und von diesem entkoppelbar ist; und
- der Fluggeräterahmen eine erste elektrische Schnittstelle aufweist, welche mit den Elektromotoren der Propeller in Verbindung steht, die Trageinheit eine zweite elektrische Schnittstelle aufweist, welche mit dem wenigstens einen wiederaufladbaren Stromspeicher in Verbindung steht, wobei die erste und die zweite elektrische Schnittstelle elektrisch leitend miteinander verbunden sind, wenn sich die Trageinheit in ihrer an den Fluggeräterahmen gekoppelten Position befindet.

In Bezug auf eine Befüll- und Ladestation sieht die Erfindung überdies vor, dass sie sowohl zum Befüllen des Vorratsbehälters mit Verteilgut als auch zum elektrischen Aufladen des wenigstens einen wiederaufladbaren Stromspeichers der Trageinheit einer landwirtschaftlichen Verteilmaschine der vorgenannten Art geeignet ist, wobei sie
- eine, insbesondere mobile, Tragplattform zur Aufnahme von wenigstens zwei Trageinheiten der Verteilmaschine;
- einen Vorratstank zur Bevorratung von Verteilgut mit einer Befülleinrichtung, welche zum Befüllen des Vorratsbehälters einer Trageinheit der Verteilmaschine ausgebildet ist, wenn sich die Trageinheit in wenigstens einer Befüllposition auf der Tragplattform befindet;
- einen Hauptstromspeicher, welcher mit einer vierten elektrischen Schnittstelle der Befüll- und Ladestation in Verbindung steht, wobei die vierte elektrische Schnittstelle mit der zweiten elektrischen Schnittstelle oder mit der dritten elektrischen Schnittstelle der Trageinheit elektrisch leitend kontaktierbar ist, wenn sich die Trageinheit in wenigstens einer Ladeposition auf der Tragplattform befindet; und
- wenigstens einen Start- und/oder Landeplatz, an welchem eine hierauf befindliche Trageinheit mit dem Fluggeräterahmen des autonomen Fluggerätes der Verteilmaschine koppelbar und von diesem entkoppelbar ist,
umfasst.

Schließlich sieht die Erfindung zur Lösung des ihr zugrunde liegenden Problems ein landwirtschaftliches Verteilsystem zum automatisierten Ausbringen von Verteilgütern vor, welches
- wenigstens eine landwirtschaftliche Verteilmaschine der vorgenannten Art mit wenigstens einem autonomen Fluggerät und wenigstens zwei Trageinheiten; und
- wenigstens eine Befüll- und Ladestation der vorgenannten Art,
umfasst.

Die erfindungsgemäße Ausgestaltung der Verteilmaschine sieht folglich eine bauliche Trennung einerseits des autonomen Fluggerätes mit seinem Fluggeräterahmen und den elektromotorisch angetriebenen Propellern, der Positionserfassungseinrichtung sowie zweckmäßigerweise auch der Steuer- und/oder Regeleinrichtung, welche beispielsweise eine programmierbaren Bordrechner oder drahtlos verbundenen externen Rechner umfassen kann, andererseits des Vorratsbehälter, des wenigstens einen Dosierorgans und des wenigstens einen Verteilorgans sowie des wenigstens einen wiederaufladbaren Stromspeichers vor, wobei letztere an einer separaten Trageinrichtung angeordnet sind, welche mittels der automatischen Kopplungseinrichtung mit dem Fluggeräterahmen koppelbar und von diesem entkoppelbar ist. Auf diese Weise ist es in einfacher Weise möglich, dass das autonome Fluggerät mittels seiner zweckmäßigerweise gleichfalls mit der Steuer- und/oder Regeleinrichtung in Verbindung stehenden Kopplungseinrichtung die gesamte Trageinheit selbsttätig zu ergreifen und freizugeben vermag, so dass die Trageinheit selbsttätig ausgetauscht werden kann, um eine Trageinheit mit entleertem Vorratsbehälter sowie erschöpftem Stromspeicher gegen eine weitere Trageinheit mit befülltem Vorratsbehälter und elektrisch aufgeladenem Stromspeicher auszutauschen und folglich Stillstandszeiten weitestgehend zu vermeiden. Aufgrund der ersten elektrischen Schnittstelle des Fluggeräterahmens, welche beispielsweise nach Art eines herkömmlichen Steckers oder einer herkömmlichen Buchse ausgestaltet sein kann und mit den Elektromotoren der Propeller sowie zweckmäßigerweise auch mit der Steuer- und/oder Regeleinrichtung sowie der Positionserfassungseinrichtung verbunden ist, welche in der an eine jeweilige Trageinheit gekoppelten Position des Fluggeräterahmens mit der zweiten elektrischen Schnittstelle der jeweiligen Trageinheit in Verbindung steht, welche gleichfalls beispielsweise nach Art einer herkömmlichen, zu dem Stecker der ersten elektrischen Schnittstelle komplementären Buchse oder eines herkömmlichen, zu der Buchse der ersten elektrischen Schnittstelle komplementären Steckers ausgestaltet sein kann und mit dem wenigstens einen wiederaufladbaren Stromspeicher der Trageinheit sowie zweckmäßigerweise auch mit dem wenigstens einen Dosierorgan sowie gegebenenfalls mit dem wenigstens einen Verteilorgan verbunden ist, lässt sich dabei das autonome Fluggerät beim Koppeln mit einer jeweiligen Trageinheit in einfacher Weise selbsttätig elektrisch kontaktieren. Ein jeweiliger Stellplatz einer Trageinheit kann dabei beispielsweise anhand der geographischen Koordinaten in die Steuer- und/oder Regeleinrichtung des autonomen Fluggerätes eingegeben werden oder kann letzteres mit entsprechenden, z.B. - wenngleich nicht notwendigerweise - kamerabasierten Sensoren ausgestattet sein, so dass es eine "leere" Trageinheit an einer vorherbestimmten Position selbsttätig abstellen kann (die automatische Kopplungseinrichtung wird entkoppelt), wonach es eine "volle" Tragstation selbsttätig anfliegt und diese aufnimmt (die automatische Kopplungseinrichtung wird gekoppelt). Die Kopplungseinrichtung selbst ist zu diesem Zweck insbesondere ebenfalls mittels der Steuer- und/oder Regeleinrichtung autonom betätigbar steht beispielsweise gleichfalls mit dem wiederaufladbaren Stromspeicher der Trageinheit in Verbindung.

Die Trageinheit einer erfindungsgemäßen Verteilmaschine umfasst vorzugsweise ein selbsttragendes Traggestell, mittels welchem die Trageinheit auf dem Untergrund abgestellt werden kann, wobei an dem Traggestell insbesondere sowohl der wenigstens eine wiederaufladbare Stromspeicher als auch der Vorratsbehälter, das wenigstens eine Dosierorgan sowie das wenigstens eine Verteilorgan montiert sind. Entsprechendes gilt für die zweite elektrische Schnittstelle, welche zweckmäßigerweise an der dem Fluggeräterahmen des autonomen Fluggerätes zugewandten Seite an dem Traggestell montiert ist, so dass sie mit der ersten elektrischen Schnittstelle des Fluggeräterahmens elektrisch kontaktiert wird, wenn die Trageinheit an den Fluggeräterahmen gekoppelt worden ist.

Zu diesem Zweck kann in vorteilhafter Ausgestaltung ferner vorgesehen sein, dass die automatische Kopplungseinrichtung selbstzentrierend ist, um die erste elektrische Schnittstelle beim Ankoppeln der Trageinheit an den Fluggeräterahmen selbsttätig mit der zweiten elektrischen Schnittstelle zu verbinden.

Dabei können vorzugsweise wenigstens zwei, insbesondere wenigstens drei, automatische Kopplungseinrichtungen vorgesehen sein, welche mit Abstand voneinander angeordnet sind, so dass die Trageinheit in ihrem an den Fluggeräterahmen des autonomen Fluggerätes gekoppelten Zustand der Trageinheit ohne Freiheitsgrade mechanisch starr ergriffen ist und dabei auch eine automatische Zentrierung der ersten elektrischen Schnittstelle des Fluggeräterahmens in Bezug auf die hierzu komplementäre, zweite elektrische Schnittstelle der Trageinheit gewährleistet ist.

Die Kopplungseinrichtung kann ferner vorzugsweise
- am Fluggeräterahmen angeordnete und zwischen einer Kopplungsposition und einer Entkopplungsposition hin und her bewegbare erste Kopplungsmittel aufweisen, welche mit hierzu komplementären zweiten Kopplungsmitteln an der Trageinheit in Eingriff und außer Eingriff bringbar sind; oder
- an der Trageinheit angeordnete und zwischen einer Kopplungsposition und einer Entkopplungsposition hin und her bewegbare zweite Kopplungsmittel aufweisen, welche mit hierzu komplementären ersten Kopplungsmitteln an dem Fluggeräterahmen in Eingriff und außer Eingriff bringbar sind.

Von den jeweiligen Paaren an komplementären Kopplungsmitteln kann dabei insbesondere jeweils eines stationär an der Trageinheit bzw. an deren Traggestell oder an dem Fluggeräterahmen und jeweils eines automatisch, beispielsweise elektromotorisch, gegebenenfalls unter Zwischenschaltung von Hebeln, Zahnrädern, Seilzügen, Riementrieben oder dergleichen, hin und her bewegbar an dem Fluggeräterahmen oder an der Trageinheit bzw. an deren Traggestell angeordnet sein, wobei das automatisch hin und her bewegbare Kopplungsmittel - oder genauer: dessen Antrieb - wiederum zweckmäßigerweise mit der Steuer- und/oder Regeleinrichtung in Verbindung steht. Ist das elektromotorisch hin und her bewegbare Kopplungsmittel an der Trageinheit angeordnet, so steht sein Antrieb zweckmäßigerweise ebenfalls mit dem wenigstens einen wiederaufladbaren Stromspeicher in Verbindung. Ist das elektromotorisch hin und her bewegbare Kopplungsmittel an dem Fluggeräterahmen angeordnet, so kann es beispielsweise an dessen erste elektrische Schnittstelle angeschlossen sein, um es nach elektrischer Kontaktierung der ersten elektrischen Schnittstelle des Fluggeräterahmens mit der zweiten elektrischen Schnittstelle der Trageinheit elektromotorisch betätigen zu können. Im Übrigen kann es sich bei den komplementären Kopplungsmitteln beispielsweise um in Ausnehmungen eingreifende Bolzen oder Platten, um an Bolzen oder Stangen angreifende, verschwenkbare oder translatorisch hin und her bewegbare Haken oder um beliebige andere, als solche aus dem Stand der Technik bekannte Kopplungsmittel handeln.

Gemäß einer vorteilhaften Ausgestaltung einer erfindungsgemäßen Verteilmaschine kann vorgesehen sein, dass an dem Fluggeräterahmen ferner ein Behelfsstromspeicher angeordnet ist, welcher mit den Elektromotoren der Propeller in Verbindung steht, wobei der Behelfsstromspeicher des Fluggeräterahmens insbesondere eine geringere Kapazität aufweist als der wenigstens eine wiederaufladbare Stromspeicher der Trageinheit. Auf diese Weise vermag sich das autonome Fluggerät auch dann selbsttätig fortzubewegen, wenn die den wenigstens einen wiederaufladbaren Stromspeicher tragende Trageinheit von dem Fluggeräterahmen entkoppelt ist. Aufgrund dessen, dass eine solche Fortbewegung jedoch nur kurzzeitig, nämlich zwischen dem Absetzen einer "leeren" Trageinheit und vor dem Ergreifen einer "vollen" Trageinheit erforderlich ist, kann und sollte der Behelfsstromspeicher aus Gewichtsgründen jedoch eine (deutlich) geringere Kapazität als der wenigstens eine, an der Trageinheit vorgesehene Stromspeicher besitzen, so dass er keinen unnötigen ständigen Ballast darstellt. In zweckmäßiger Ausgestaltung steht der Behelfsstromspeicher des Fluggeräterahmens dabei ferner mit der Steuer- und/oder Regeleinrichtung sowie mit der Positionserfassungseinrichtung in elektrischer Verbindung und kann ferner z.B. mit der bzw. den Kopplungseinrichtung(en) in elektrischer Verbindung stehen, sofern deren hin und her bewegbare(s) Kopplungsmittel an dem Fluggeräterahmen vorgesehen ist bzw. sind.

In diesem Zusammenhang sieht eine bevorzugte Ausführungsform vor, dass der Behelfsstromspeicher wiederaufladbar ist, wobei er insbesondere mit der ersten elektrischen Schnittstelle des Fluggeräterahmens elektrisch leitend in Verbindung steht, um ihn mittels des wenigstens eines wiederaufladbaren Stromspeichers der Trageinheit aufzuladen, wenn sich die Trageinheit in ihrer an den Fluggeräterahmen gekoppelten Position befindet, in welcher die erste und die zweite elektrische Schnittstelle elektrisch leitend miteinander verbunden sind. Auf diese Weise ist es möglich, dass der beispielsweise gleichfalls von einem handelsüblichen Akkumulator oder auch von einem oder mehreren Kondensatoren gebildete Behelfsstromspeicher des Fluggeräterahmens stets von dem wenigstens einen wiederaufladbaren Stromspeicher der Trageinheit elektrisch aufgeladen wird, sobald die erste elektrische Schnittstelle des Fluggeräterahmens mit der zweiten elektrischen Schnittstelle der Trageinheit verbunden worden ist, d.h. wenn die Trageinheit an den Fluggeräterahmen gekoppelt worden ist, wodurch nicht nur ein periodisches Nachladen des Behelfsstromspeichers gewährleistet ist, sondern dieser auch eine sehr geringe Kapazität und folglich eine sehr geringe Größe bzw. ein sehr geringes Gewicht besitzen kann.

Gemäß einer vorteilhaften Weiterbildung einer erfindungsgemäßen Verteilmaschine kann überdies vorgesehen sein, dass der Fluggeräterahmen ferner eine erste elektronische Schnittstelle aufweist, welche mit der Steuer- und/oder Regeleinrichtung in Verbindung steht, die Trageinheit eine zweite elektronische Schnittstelle aufweist, welche zumindest mit dem wenigstens einen Dosierorgan und insbesondere auch mit dem wenigstens einen Verteilorgan in Verbindung steht, wobei die erste und die zweite elektronische Schnittstelle elektrisch leitend miteinander verbunden sind, wenn sich die Trageinheit in ihrer an den Fluggeräterahmen gekoppelten Position befindet, wobei die erste und zweite elektronischen Schnittstellen insbesondere in die ersten und zweiten elektrischen Schnittstellen integriert sind. Aufgrund einer solchen Ausgestaltung ist eine eigene Steuer- und/oder Regeleinrichtung der Trageinheit, welche deren Dosierorgan(e) oder auch deren Verteilorgan(e) befehligt, um für die gewünschte Verteilung des Verteilgutes auf dem Feld zu sorgen, entbehrlich, indem die zentrale Steuer- und/oder Regeleinrichtung des autonomen Fluggerätes zugleich die Dosier- bzw. Verteilorgane zu befehligen vermag, sobald die erste elektronische Schnittstelle des Fluggeräterahmens mit der zweiten elektronischen Schnittstelle der Trageinheit verbunden worden ist, d.h. wenn die Trageinheit an den Fluggeräterahmen gekoppelt worden ist. Die ersten und zweiten elektronischen Schnittstellen, welche ebenso wie die ersten und zweiten elektrischen Schnittstellen komplementär zueinander sind und beispielsweise miteinander in Eingriff bingbare Stecker-/Buchseneinheiten umfassen können, können dabei von den ersten und zweiten elektrischen Schnittstellen getrennt oder insbesondere in diese integriert ausgestaltet sein, wie beispielsweise in Form einer gemeinsamen mehrpoligen Stecker-/Buchseneinheit oder dergleichen.

Darüber hinaus hat es sich als vorteilhaft erwiesen, wenn dem Vorratsbehälter ein Füllstandssensor zugeordnet ist, welcher zweckmäßigerweise mit der Steuer- und Regeleinrichtung oder mit der zweiten elektronischen Schnittstelle der Trageinheit in Verbindung steht. Der Füllstandssensor kann z.B. am Fluggeräterahmen des autonomen Fluggerätes angeordnet sein und direkt mit deren Steuer- und/oder Regeleinrichtung kommunizieren, oder er ist an der Trageinheit, beispielsweise an deren Vorratsbehälter, angeordnet und steht mit der zweiten elektronischen Schnittstelle der Trageinheit in Verbindung, so dass er über die miteinander verbundenen ersten und zweiten elektronischen Schnittstellen mit der Steuer- und/oder Regeleinrichtung zu kommunizieren vermag, wenn die Trageinheit an den Fluggeräterahmen gekoppelt worden ist. Detektiert der Füllstandssensor dabei einen weitgehend leeren Vorratsbehälter, so veranlasst die Steuer- und/oder Regeleinrichtung das autonome Fluggerät zum Abbruch der Verteilarbeit, um die Trageinheit mit dem leeren Vorratsbehälter in der oben beschriebenen Weise gegen eine Trageinheit mit einem vollen Vorratsbehälter (sowie insbesondere mit einem aufgeladenen Stromspeicher) auszutauschen, wobei die Position des Abbruchs der Verteilarbeit, beispielsweise anhand der geographischen Ortskoordinaten, zweckmäßigerweise in der Steuer- und/oder Regeleinrichtung gespeichert wird, um die Verteilarbeit genau dort wieder mit der ausgetauschten Trageinheit aufzunehmen, wo sie mit der vorherigen Trageinheit unterbrochen worden ist.

Während der wenigstens eine wiederaufladbare Stromspeicher der Trageinheit grundsätzlich auch über deren zweite elektrische Schnittstelle aufladbar sein kann, indem die zweite elektrische Schnittstelle mit einer Stromquelle elektrisch leitend kontaktiert wird, kann in vorteilhafter Ausgestaltung vorgesehen sein, dass die Trageinheit eine mit dem wenigstens einen wiederaufladbaren Stromspeicher elektrisch leitend verbundene dritte elektrische Schnittstelle aufweist, welche zum elektrischen Laden des wenigstens einen wiederaufladbaren Stromspeichers dient, wobei die dritte elektrische Schnittstelle insbesondere im Bereich der Unterseite der Trageinheit angeordnet ist. Auf diese Weise lässt sich der Ladevorgang, insbesondere aufgrund der leichteren Zugänglichkeit der dritten elektrischen Schnittstelle, einfacher gestalten, indem die Trageinheit beispielsweise auf entsprechenden Bodenkontakten einer Stromquelle abgestellt und die im Bereich der Unterseite der Trageinheit angeordnete dritte elektrische Schnittstelle dabei mit den Bodenkontakten elektrisch leitend kontaktiert wird.

Während die Verteilmaschine grundsätzlich auch zum Ausbringen von flüssigem Verteilgut, wie Pflanzenschutzmitteln, Pestiziden, Insektiziden und dergleichen, ausgestaltet sein und zu diesem Zweck beispielsweise einen geschlossenen Vorratsbehälter nach Art eines Flüssigkeitstanks, ein Dosierorgan in Form einer gemäß der gewünschten Ausbringmenge steuer- bzw. regelbaren Pumpe sowie eine Mehrzahl an Verteilorganen in Form von an Auslegern angeordneten Düsen umfassen kann, bietet sie sich ferner insbesondere zum Ausbringen von partikulären Feststoffen an. Während der Vorratsbehälter in diesem Fall zur Aufnahme von pulver- und/oder partikelförmigem Verteilgut, wie Dünger, Kalk, Saatgut und dergleichen, ausgebildet sein kann, kann das wenigstens eine Dosierorgan vorzugsweise ein(en) unterhalb des Vorratsbehälters angeordneten Dosierschieber oder Dosierrad, wie beispielsweise in Form eines Zellen- oder Nockenrades, aufweisen. Das wenigstens eine Verteilorgan kann in diesem Fall beispielsweise eine drehangetriebene Verteilerscheibe, wie es bei herkömmlichen, als Anbaugeräte oder Selbstfahrer ausgestalteten Scheibenstreuern bekannt ist, oder z.B. auch mehrere, an einem oder mehreren Auslegern angeordnete Prallteller bzw. Prallplatten aufweisen, wie es bei herkömmlichen Pneumatikstreuern einschließlich pneumatischer Sä- oder Drillmaschinen bekannt ist. Der Antrieb des Dosierschiebers bzw. des Dosierrades sowie der Verteilerscheibe geschieht in diesem Fall zweckmäßigerweise gleichfalls mittels Elektromotoren, wie beispielsweise Servomotoren, welche mit dem wenigstens einen wiederaufladbaren Stromspeicher in elektrisch leitender Verbindung stehen. Darüber hinaus sind die Elektromotoren zweckmäßigerweise steuer- und/oder regelbar, wie es als solches gleichfalls aus dem Stand der Technik bekannt ist, und stehen zu diesem Zweck vorzugsweise mittels der ersten und zweiten elektronischen Schnittstellen mit der Steuer- und/oder Regeleinrichtung des autonomen Fluggerätes in Verbindung, wenn die Trageinheit an den Fluggeräterahmen gekoppelt worden ist.

Im Falle eines nach Art eines Scheibenstreuers ausgestalteten landwirtschaftlichen Verteilmaschine kann ferner vorgesehen sein, dass die Trageinheit zwei, insbesondere unabhängig voneinander betätigbare, Dosierorgane sowie zwei, insbesondere unabhängig voneinander drehangetriebene, Verteilorgane in Form von Verteilerscheiben umfasst, wobei sie ferner insbesondere zwei Einrichtungen zur Verstellung des Aufgabepunktes des Verteilgutes auf die jeweilige Verteilerscheibe aufweist. In Bezug auf die elektrische und elektronische Kontaktierung einer solchen Einrichtung zur Verstellung des Aufgabepunktes gilt das oben in Bezug auf die Dosier- und Verteilorgane gesagte.

Die erfindungsgemäße Ausgestaltung einer Befüll- und Ladestation, welche sowohl zum Befüllen des Vorratsbehälters mit Verteilgut als auch zum elektrischen Aufladen des wenigstens einen wiederaufladbaren Stromspeichers der Trageinheit einer landwirtschaftliche Verteilmaschine der vorgenannten Art geeignet ist, umfasst erfindungsgemäß- eine Tragplattform zur Aufnahme von wenigstens zwei Trageinheiten der Verteilmaschine, wobei die Tragplattform grundsätzlich stationär sein kann, aber vorzugsweise mobil ist und beispielsweise auf einem motorisierten Fahrzeug oder einem Anhänger angeordnet sein kann, um sie an ein zu bestellendes Feld überführen zu können. Die Tragplattform kann dabei wenigstens zwei oder freilich auch mehr Trageinheiten der Verteilmaschine aufnehmen, so dass das autonome Fluggerät jedenfalls eine "leere" Trageinheit auf der Tragplattform abstellen kann, um dort deren Vorratsbehälter mit Verteilgut zu befüllen und deren wiederaufladbaren Stromspeicher elektrisch aufzuladen, bevor es eine "volle" Trageinheit von der Tragplattform aufnimmt. Zu diesem Zweck umfasst die erfindungsgemäße Befüll- und Ladestation ferner einen Vorratstank zur Bevorratung von landwirtschaftlichen Verteilgütern mit einer Befülleinrichtung, welche zum Befüllen des Vorratsbehälters einer Trageinheit der Verteilmaschine ausgebildet ist, wenn sich die Trageinheit in wenigstens einer Befüllposition auf der Tragplattform befindet. Je nach gewünschtem Verteilgut (siehe oben) kann es sich bei dem Vorratstank um einen geschlossenen Flüssigkeitstank oder um einen gegebenenfalls nach oben offenen, aber zweckmäßigerweise mittels einer gegen Niederschlag und Verschmutzung schützenden Abdeckung verschließbaren Feststofftank handeln.

Darüber hinaus umfasst die Befüll- und Ladestation einen Hauptstromspeicher, welcher insbesondere eine (deutlich) höhere Kapazität besitzt als der wiederaufladbare Stromspeicher einer jeweiligen Trageinheit der Verteilmaschine, wobei der Hauptstromspeicher mit einer vierten elektrischen Schnittstelle der Befüll- und Ladestation in Verbindung steht, welche mit der zweiten elektrischen Schnittstelle oder mit der (zusätzlichen) dritten elektrischen Schnittstelle der Trageinheit elektrisch leitend kontaktierbar ist, wenn sich die Trageinheit in wenigstens einer Ladeposition auf der Tragplattform befindet. Die vierte elektrische Schnittstelle der Befüll- und Ladestation ist folglich mit der zweiten elektrischen Schnittstelle der Trageinheit oder mit der weiteren, an einer anderen Position an deren Traggestell angeordneten dritten elektrischen Schnittstelle, welche gleichfalls mit deren wenigstens einem wiederaufladbaren Stromspeicher elektrisch leitend verbunden ist, komplementär, so dass der wiederaufladbare Stromspeicher der Trageinheit aufgeladen wird, wenn die Trageinheit in der wenigstens einen Ladeposition auf der Tragplattform steht. Sofern die vierte elektrische Schnittstelle der Befüll- und Ladestation mit der zweiten elektrischen Schnittstelle der Trageinheit komplementär ist, kann die vierte elektrische Schnittstelle im Wesentlichen ähnlich der ersten elektrischen Schnittstelle des Fluggeräterahmens ausgestaltet sein und beispielsweise Stecker- bzw. Buchsen umfassen. Sofern die vierte elektrische Schnittstelle der Befüll- und Ladestation mit der (zusätzlichen) dritten elektrischen Schnittstelle der Trageinheit komplementär ist, so sind beispielsweise auch im Bodenbereich der Tragplattform angeordnete elektrische Kontakte, wie beispielsweise nach Art von Stromschienen oder dergleichen, welche gegebenenfalls mit Zentriereinrichtungen für die dritte Schnittstelle der Trageinheit versehen sein können, z.B. im Wesentlichen in Form eines V- oder U-Profils, denkbar, welche mit an der Unterseite des Traggestells der Trageinheit angeordneten elektrischen Kontakten der dritten elektrischen Schnittstelle kontaktierbar sind, wenn sich die Trageinheit in ihrer wenigstens einen Ladeposition befindet.

Darüber hinaus umfasst die Befüll- und Ladestation erfindungsgemäß wenigstens einen Start- und/oder Landeplatz, an welchem eine hierauf befindliche Trageinheit mit dem Fluggeräterahmen der Verteilmaschine koppelbar und von diesem entkoppelbar ist, so dass das autonome Fluggerät jeweils eine "leere" Trageinheit auf dem Start- und/oder Landeplatz absetzen bzw. eine auf dem Start- und/oder Landeplatz befindliche "volle" Trageinheit ankoppeln kann, während sich eine weitere Trageinheit beispielsweise in der bzw. einer anderen Befüll- und/oder Ladeposition auf der Tragplattform der Befüll- und Ladestation befindet. Dabei können die geographischen Koordinaten des bzw. der Start- und/oder Landeplatzes bzw. -plätze beispielsweise in die Steuer- und/oder Regeleinrichtung des autonomen Fluggerätes eingegeben werden, sobald die Befüll- und Ladestation an einem vorgesehen Ort nahe eines zu bestellenden Feldes abgestellt worden ist, um dort stets die "leere" Trageinheit gegen eine "volle" Trageinheit auszutauschen.

In vorteilhafter Ausgestaltung kann vorgesehen sein, dass
- die Ladeposition mit der Befüllposition identisch ist, um den Vorratsbehälter einer hierauf befindlichen Trageinheit zu befüllen und zugleich deren wenigstens einen wiederaufladbaren Stromspeicher zu laden; und/oder
- der Start- und/oder Landeplatz an der Ladeposition angeordnet ist, um den wenigstens einen wiederaufladbaren Stromspeicher einer hierauf abgestellten Trageinheit zu laden.

Die vierte elektrische Schnittstelle der Befüll- und Ladestation kann folglich nahe der Befülleinrichtung des Vorratstanks der Befüll- und Ladestation und/oder an dem Start- und/oder Landeplatz angeordnet und im Übrigen hinsichtlich der genauen konstruktiven Ausgestaltung und Anordnung der vierten elektrischen Schnittstelle (siehe oben) und der Befülleinrichtung an die Geometrie der Trageinheit angepasst. Wie bereits erwähnt, kann die vierte elektrische Schnittstelle dabei beispielsweise wenigstens eine oder ein Paar von sich entlang der Tragplattform erstreckender Stromschienen oder auch eine Mehrzahl an sich entlang der Tragplattform erstreckender Bodenkontakte umfassen, so dass ein elektrisches Aufladen des wenigstens einen wiederaufladbaren Stromspeichers in praktisch allen Positionen auf der Tragplattform möglich wird, wobei selbstverständlich auch zusätzliche, zur Aufnahme von mehr als zwei Trageinheiten dienende Stellpositionen auf der Tragplattform möglich sind, welche vorzugsweise gleichfalls über die vierte elektrische Schnittstelle verfügen und folglich je eine Ladeposition definieren. Entsprechendes gilt selbstverständlich für den Start- und/oder Landeplatz, welcher gleichfalls mit der vierten elektrischen Schnittstelle ausgestattet sein kann.

In weiterhin vorteilhafter Ausgestaltung kann vorgesehen sein, dass die Tragplattform der Befüll- und Ladestation bewegbar oder mit einer Fördereinrichtung ausgestattet ist, um eine hierauf befindliche Trageinheit zwischen der Befüllposition und/oder der Ladeposition bzw. den mehreren Befüll- und/oder Ladepositionen und dem Start- und/oder Landeplatz hin und her zu bewegen. Auf diese Weise ist es möglich, eine auf wenigstens einem Start- und/oder Landeplatz abgestellte "leere" Trageinheit gegen eine "volle" Trageinheit auszutauschen oder auch die auf der Tragplattform abgestellte(n) Trageinheit(en) in automatisierter Weise zwischen dem/den Start- und/oder Landeplatz bzw. -plätzen und der bzw. den Befüll- und/oder Ladeposition(en) hin und her zu verlagern, so dass das autonome Fluggerät beispielsweise stets nur einen Start- und Landeplatz anfliegen muss, um Trageinheiten mit dem Fluggeräterahamen zu koppeln und von diesem zu entkoppeln. Die elektrische Kontaktierung der vierten elektrischen Schnittstelle der Befüll- und Ladestation mit der zweiten oder der dritten elektrischen Schnittstelle der Trageinheit zum Laden deren wiederaufladbaren Stromspeicher(s) kann folglich ebenso ohne Zuhilfenahme des autonomen Fluggerätes mittels der Befüll- und Ladestation geschehen wie die Befüllung des Vorratsbehälters der Trageinheit durch "Andocken" desselben an die Befülleinrichtung oder durch Anordnen des Vorratsbehälters unterhalb derselben. Die Tragplattform kann dabei z.B. in Bezug auf den beispielsweise stationär auf einem fahrbaren Chassis angeordneten Vorratstank, sei es translatorisch oder sei es rotatorisch, hin und her bewegbar sein, oder der Trageinheit kann beispielsweise auch eine Fördereinrichtung nach Art eines umlaufenden Förderbandes, einer Rollenbahn oder dergleichen zugeordnet sein, um die Trageinheit(en) zwischen der Befüll- und/oder Ladeposition und dem Start- und/oder Landeplatz hin und her zu verlagern.

Darüber hinaus kann in vorteilhafter Ausgestaltung vorgesehen sein, dass die Befülleinrichtung der Befüll- und Ladestation entlang der Tragplattform bewegbar ist, um mehrere Befüllpositionen der Tragplattform zur Verfügung zu stellen. Auf diese Weise ist auch im Falle einer stationären Tragplattform ein automatisches Befüllen des Vorratsbehälters einer auf einer Befüllposition abgestellten Trageinheit in praktisch allen Positionen auf der Tragplattform möglich, wobei - wie oben erwähnt - selbstverständlich auch zusätzliche, zur Aufnahme von mehr als zwei Trageinheiten dienende Stellpositionen auf der Tragplattform denkbar sind, entlang welcher die Befülleinrichtung vorzugsweise gleichfalls bewegbar sein kann, um je eine (zusätzliche) Befüllposition zu definieren. Entsprechendes gilt selbstverständlich für den Start- und/oder Landeplatz, über welchen die Befülleinrichtung gleichfalls bewegbar sein kann.

Gemäß einer vorteilhaften Weiterbildung einer erfindungsgemäßen Befüll- und Ladestation kann ferner vorgesehen sein, dass der - oder genauer: wenigstens ein - Start- und/oder Landeplatz der Befüll- und Ladestation eine Hubeinrichtung aufweist, welche zum Anheben einer hierauf befindlichen Trageinheit auf ein Niveau oberhalb der Tragplattform und zum Absenken der Trageinheit im Wesentlichen auf das Niveau der Tragplattform ausgebildet ist. Mittels einer solchen Hubeinrichtung, welche z.B. Teleskopstützen oder dergleichen umfassen kann, lässt sich die Befüll- und Ladestation relativ kompakt ausgestalten, ohne dass die Gefahr einer Kollision des autonomen Fluggerätes mit Teilen der Befüll- und Ladestation, wie beispielsweise dem Vorratstank oder der Befülleinrichtung, besteht.

Darüber hinaus kann die Befüll- und Ladestation vorteilhafterweise ferner einen mit dem Hauptstromspeicher in Verbindung stehenden Stromgenerator aufweisen, wie z.B. nach Art der Lichtmaschine eines Benzin- bzw. Dieselmotors, damit der Hauptstromspeicher keiner übermäßige Kapazität bedarf und folglich kein übermäßiges Gewicht aufweisen muss, welches beim Verlagern der Befüll- und Ladestation an die jeweiligen Arbeitsorte mitbewegt werden muss.

Was die Befülleinrichtung der Befüll- und Ladestation betrifft, so richtet sich deren konstruktive Ausgestaltung vornehmlich nach jener des zur Aufnahme von pulver- bzw. partikelförmigen oder auch flüssigen Verteilgütern ausgestalteten Vorratsbehälters der Trageinheit(en). So kann die Befülleinrichtung im Falle eines nach oben offenen Vorratsbehälters der Trageinheit zur Bevorratung von pulver- oder partikelförmigen Feststoffen beispielsweise eine sich von dem Vorratstank bis oberhalb des Vorratsbehälters einer in der Befüllposition befindlichen Trageinheit erstreckende Fördereinrichtung, z.B. nach Art eines Förderbandes, einer Förderschnecke, eines mit einem Gebläse versehenen pneumatischen Förderrohres oder dergleichen, aufweisen, welche insbesondere mit einer Steuer- und/oder Regeleinrichtung in Verbindung steht, welche nicht notwendigerweise mit jener des autonomen Fluggerätes identisch sein muss und insbesondere in einer Bordelektronik der Befüll- und Ladestation implementiert sein kann, in welche das Aufnahmevolumen des Vorratsbehälters der Trageinheit eingebbar ist. Im Falle eines geschlossenen Vorratsbehälters der Trageinheit zur Bevorratung von flüssigen Verteilgütern kann die Befülleinrichtung hingegen beispielsweise einen an einen Flüssigkeitsanschluss des Vorratsbehälters der in ihrer Befüllposition auf der Tragplattform befindlichen Trageinheit andockbaren Befüllstutzen aufweisen, um die entsprechende Menge an Verteilgut, z.B. mittels einer Pumpe, aus dem Vorratstank der Befüll- und Ladestation in den Vorratsbehälter der Trageinheit zu überführen. Um die Befülleinrichtung mit Vorteil in der oben beschriebenen Weise entlang der Tragplattform bewegen zu können, um mehrere Befüllpositionen der Tragplattform zu definieren, kann beispielsweise eine (Linear)führung oder dergleichen vorgesehen sein und/oder kann die Befülleinrichtung beispielsweise schwenkbar und/oder teleskopierbar sein.

Ferner sei an dieser Stelle darauf hingewiesen, dass das autonome Fluggerät und/oder die Trageinheit oder auch nur eine oder einige einer Mehrzahl an Trageinheiten in als solcher aus dem Stand der Technik bekannten Weise mit verschiedenartigen Sensoren einschließlich Kameras ausgestattet sein können, um das Feld, z.B. dessen topologischen Gegebenheiten etc., und/oder die dort kultivierten Pflanzen, z.B. hinsichtlich Größe, Reife etc., zu erkunden. Solche Sensoren stehen zweckmäßigerweise gleichfalls mit der Steuer- und/oder Regeleinrichtung in Wirkverbindung, so dass die Verteilarbeit an die sensorisch erfassten Daten angepasst werden kann.

Weitere Merkmale und Vorteile der Erfindung ergeben sich aus der nachfolgenden Beschreibung von Ausführungsbeispielen unter Bezugnahme auf die Zeichnungen, Dabei zeigen:
- Fig. 1: eine schematische perspektivische Ansicht einer Ausführungsform einer erfindungsgemäßen landwirtschaftlichen Verteilmaschine zum automatisierten Ausbringen von Verteilgut auf der Basis eines autonomen Fluggerätes mit einem Fluggeräterahmen und einer hiermit gekoppelten Trageinheit;
- Fig. 2: eine schematische Seitenansicht der Verteilmaschine gemäß Fig. 1, wobei der Fluggeräterahmen des autonomen Fluggerätes mit der Trageinheit gekoppelt ist;
- Fig. 3: eine der Fig. 2 entsprechende Seitenansicht der Verteilmaschine gemäß Fig. 1, wobei der Fluggeräterahmen des autonomen Fluggerätes von der Trageinheit entkoppelt ist;
- Fig. 4: eine schematische perspektivische Detailansicht der an den Fluggeräterahmen gekoppelten Trageinheit entsprechend der Position "A" gemäß Fig. 1 zur Veranschaulichung einer Ausführungsform einer Kopplungseinrichtung;
- Fig. 5: eine der Fig. 4 entsprechende Detailansicht der von dem Fluggeräterahmen entkoppelten Trageinheit bei entkoppelter Kopplungseinrichtung;
- Fig. 6: eine schematische Detailansicht der von dem Fluggeräterahmen entkoppelten Trageinheit entsprechend dem Ausschnitt "B" gemäß Fig. 3;
- Fig. 7: eine schematische perspektivische Ansicht der Trageinheit der Verteilmaschine gemäß Fig. 1 bis 3 mit einem Traggestell, an welchem sowohl ein Vorratsbehälter einschließlich Dosier- und Verteilorgan als auch zwei wiederaufladbare Stromspeicher festgelegt sind;
- Fig. 8: eine schematische Stirnansicht der Trageinheit gemäß Fig. 7;
- Fig. 9: eine schematische Seitenansicht der Trageinheit gemäß Fig. 7 und 8;
- Fig. 10: eine schematische Draufsicht auf die Trageinheit gemäß Fig. 7 bis 9 von oben;
- Fig. 11: eine schematische perspektivische Ansicht einer Ausführungsform einer erfindungsgemäßen Befüll- und Ladestation, welche sowohl zum Befüllen des Vorratsbehälters mit Verteilgut als auch zum elektrischen Aufladen der wiederaufladbaren Stromspeicher der Trageinheit gemäß Fig. 7 bis 10 der landwirtschaftliche Verteilmaschine gemäß Fig. 1 bis 3 ausgebildet ist;
- Fig. 12: eine schematische Seitenansicht der Befüll- und Ladestation gemäß Fig. 11;
- Fig. 13: eine schematische Stirnansicht der Befüll- und Ladestation gemäß Fig. 11 und 12; und
- Fig. 14: eine schematische Draufsicht auf die Befüll- und Ladestation gemäß Fig. 11 bis 13.

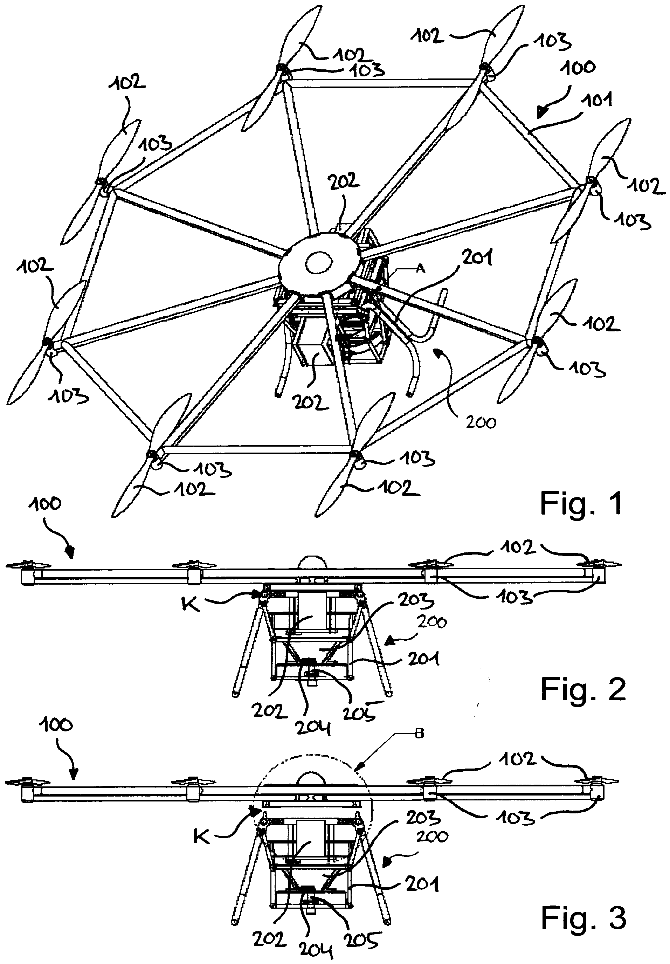

In der Fig. 1 ist eine Ausführungsform einer landwirtschaftlichen Verteilmaschine zum automatisierten Ausbringen von Verteilgut schematisch wiedergegeben. Die Verteilmaschine umfasst ein autonomes Fluggerät 100 nach Art einer Drohne, an dessen Fluggeräterahmen 101 eine Mehrzahl an Propellern 102 drehbar gelagert und mittels je eines Elektromotors 103 unabhängig voneinander drehangetrieben sind. Die Elektromotoren 103 stehen mit einer zeichnerisch nicht dargestellten Steuer- und/oder Regeleinrichtung in Verbindung, um sie gemäß dem gewünschten Fortbewegungsmuster des autonomen Fluggerätes 100 anzutreiben, wobei die Steuer- und/oder Regeleinrichtung gleichfalls, beispielsweise in einem Gehäuse verkapselt, an dem Fluggeräterahmen 101 angeordnet ist, aber grundsätzlich auch extern vorgesehen und mit dem autonomen Fluggerät 100 drahtlos kommunizieren kann. Darüber hinaus ist an dem Fluggeräterahmen 101 eine gleichfalls nicht zeichnerisch dargestellte Positionserfassungseinrichtung, z.B. in Form eines GPS-Empfängers, angeordnet, welche ebenfalls mit der Steuer- und/oder Regeleinrichtung in Verbindung steht und diese insbesondere mit den geographischen Koordinaten der Ist-Position des autonomen Fluggerätes 100 in Echtzeit zu versorgen vermag.

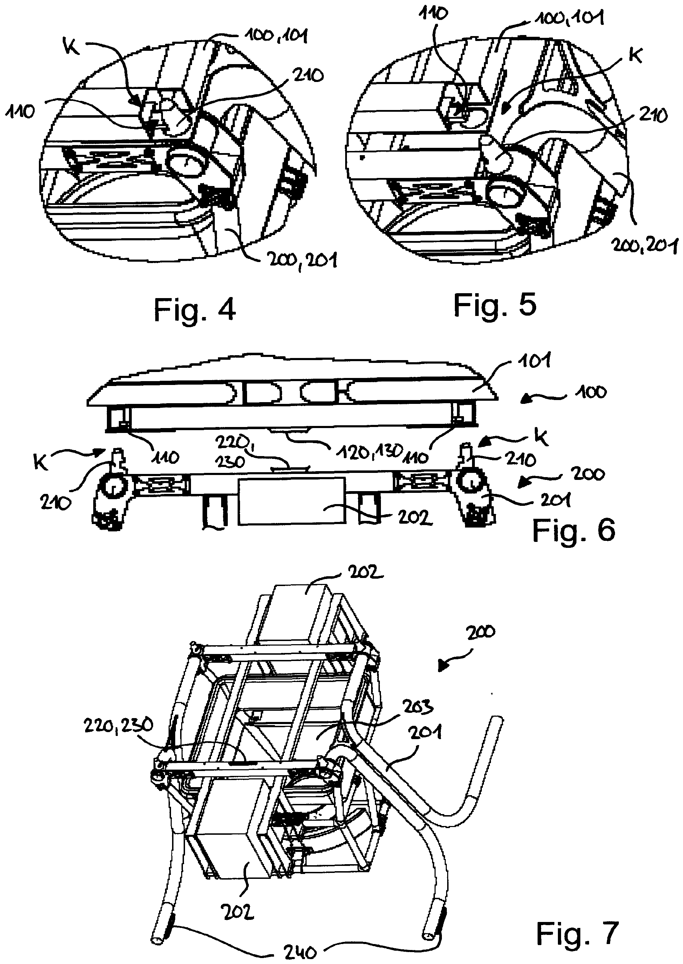

Wie sich insbesondere auch aus den Fig. 2 und 3 ergibt, umfasst die Verteilmaschine ferner eine oder insbesondere mehrere in den Fig. 7 bis 10 nochmals einzeln dargestellte separate Trageinheit(en) 200, an deren selbsttragendem und mittels Tragstützen auf dem Boden abstellbaren Traggestell 201 wenigstens ein - hier zwei - wiederaufladbare Stromspeicher 202 montiert sind, welche z.B. von handelsüblichen Akkumulatoren gebildet sein können. An dem Traggestell 201 der Trageinheit 200 ist ferner ein Vorratsbehälter 203 zur Aufnahme von Verteilgut, ein unterhalb des Vorratsbehälters 203 angeordnetes Dosierorgan 204 sowie ein wiederum unterhalb des Dosierorgans 204 angeordnetes Verteilorgan 205 montiert. Beim vorliegenden Ausführungsbeispiel dient der nach oben offene und sich nach unten im Wesentlichen trichterförmig verjüngende Vorratsbehälter 203 zur Aufnahme von pulver- und/oder partikelförmigem Verteilgut, wie z.B. Dünger, Kalk, Saatgut und dergleichen, während das Dosierorgan 204 einen mit einer im Boden des Vorratsbehälters 203 vorgesehenen Auslauföffnung (nicht gezeigt) zusammenwirkenden, z.B. elektromotorisch mittels Servomotoren oder Aktuatoren gesteuert verlagerbaren Dosierschieber und das Verteilorgan 205 eine auf einer etwa senkrechten, elektromotorisch gesteuert drehangetriebenen Welle sitzende, mit Wurfflügeln versehene Verteilerscheibe (aus Veranschaulichungsgründen nicht zeichnerisch wiedergegeben) umfasst. Die Dosier- 204 und Verteilorgane 205 sind gleichfalls von den wiederaufladbaren Stromspeichern 202 mit Strom versorgt.

Wie insbesondere aus den Detailansichten gemäß den Fig. 4 bis 6 ersichtlich, ist das Traggestell 201 der Trageinheit 200 mittels automatischer Kopplungseinrichtungen K mit dem Fluggeräterahmen 101 des autonomen Fluggerätes 100 koppelbar und von diesem entkoppelbar, wobei beim vorliegenden Ausführungsbeispiel vier solcher Kopplungseinrichtungen K vorgesehen sind, welche an den einander zugewandten Seiten des Fluggerätes 100 und der Trageinheit 200 mit Abstand voneinander angeordnet sind. Eine jede Kopplungseinrichtung K umfasst dabei beispielsweise jeweils ein an dem Fluggeräterahmen 101 angeordnetes und zwischen einer Kopplungsposition (Fig. 4) und einer Entkopplungsposition (Fig. 5 und 6), z.B. elektromotorisch über Hebelgestänge, Seilzüge, Riementriebe oder dergleichen, hin und her bewegbares erstes Kopplungsmittel 110, welches im vorliegenden Fall einerseits eine am Fluggeräterahmen 101 stationär angeordnete Durchgangsöffnung, andererseits einen translatorisch teilweise in den Querschnitt der Durchgangsöffnung hinein und aus diesem heraus hin und her bewegbaren Rastfinger aufweist. Das erste Kopplungsmittel 110 ist mit einem hierzu komplementären zweiten Kopplungsmittel 210, welches an der Trageinheit 200 beispielsweise stationär angeordnet ist, infolge Hin- und Herverlagerung seines Rastfingers in Eingriff und außer Eingriff bringbar, um die Trageinheit 200 automatisch mit dem autonomen Fluggerät 100 zu koppeln und von diesem zu entkoppeln. Das zweite Kopplungsmittel 110 der Trageinheit 100 weist zu diesem Zweck im vorliegenden Fall einen sich in Richtung seines freien Endes im Wesentlichen konisch verjüngenden Zapfen auf, welcher in die Durchgangsbohrung des ersten Kopplungsmittels 110 einführbar ist, wobei das zweite Kopplungsmittel 201 an seinem dem hin und her bewegbaren Rastfinger des ersten Kopplungsmittels 110 zugewandten Umfangsabschnitt ferner einen radialen Einschnitt umfasst, welcher zum Eingriff des Rastfingers des ersten Kopplungsmittels 110 dient. Aufgrund dieser konischen Ausgestaltung des Zapfens des zweiten Kopplungsmittels 210 ist die automatische Kopplungseinrichtung selbstzentrierend, um die Trageinheit 200 einfach an das autonome Fluggerät 100 "andocken" zu können.

Wie sich überdies aus der Detailansicht der Fig. 6 ergibt, weist der Fluggeräterahmen 101 des autonomen Fluggerätes 100 ferner eine erste elektrische Schnittstelle 120, beispielsweise in Form eines Steckers oder einer Buchse, auf, welche mit den Elektromotoren 103 der Propeller 102 sowie insbesondere auch mit der Steuer- und Regeleinrichtung sowie mit der Positionserfassungseinrichtung in elektrisch leitender Verbindung steht, während das Traggestell 201 der Trageinheit 200 eine zweite elektrische Schnittstelle 220, beispielsweise in Form einer zu der ersten elektrischen Schnittstelle 120 des Fluggeräterahmens 101 komplementären Buchse oder eines hierzu komplementären Steckers, aufweist, welche mit den wiederaufladbaren Stromspeichen 202 der Trageinheit 200 in Verbindung steht, wobei die erste 120 und die zweite elektrische Schnittstelle 220 elektrisch leitend miteinander verbunden, z.B. ineinander eingesteckt sind, wenn sich die Trageinheit 200 in ihrer an den Fluggeräterahmen 100 gekoppelten Position gemäß den Fig. 1, 2 und 4 befindet (die Kopplungseinrichtungen K befinden sich in ihrer ineinander eingreifenden Kopplungsposition). Die Stecker bzw. Buchsen der ersten und zweite elektrischen Schnittstelle 120, 220 können dabei zweckmäßigerweise ebenfalls sich konisch verjüngende Formen besitzen, um sie selbsttätig miteinander zu verbinden, wenn die Trageinheit 200 an das autonome Fluggerät 100 "angedockt" wird, indem die automatischen Kopplungseinrichtungen K miteinander gekoppelt werden. Die Stromspeicher 202 vermögen auf diese Weise die elektrisch betriebenen Komponenten des autonomen Fluggerätes 100 mit Strom zu versorgen, wenn letzteres mit einer Trageinheit 200 gekoppelt worden ist.

Wie gleichfalls der Detailansicht der Fig. 6 zu entnehmen ist, weist der Fluggeräterahmen 101 des autonomen Fluggerätes 100 ferner eine erste elektronische Schnittstelle 130 auf, welche mit der Steuer- und/oder Regeleinrichtung in Verbindung steht, während das Traggestell 201 der Trageinheit 200 eine zweite elektronische Schnittstelle 230 aufweist, welche dem Dosierorgan 204 und mit dem Verteilorgan 205 - oder genauer: mit deren steuerbaren elektromotorischen Antrieben - in Verbindung steht. Die erste 130 und zweite elektronischen Schnittstellen 230 sind beim vorliegenden Ausführungsbeispiel ersten 120 und zweiten elektrischen Schnittstellen 130 integriert, welche beispielsweise mehrpolige Buchsen bzw. Stecker umfassen, welche sowohl zur Leitung von Strom als auch zur Übertragung von elektronischen Signalen geeignet sind. Folglich sind auch die erste 130 und die zweite elektronische Schnittstelle 230 elektrisch leitend miteinander verbunden, wenn sich das Traggestell 201 der Trageinheit 200 in seiner an den Fluggeräterahmen 101 des autonomen Fluggerätes 100 gekoppelten Position gemäß den Fig. 1, 2 und 4 befindet (die Kopplungseinrichtungen K befinden sich in ihrer ineinander eingreifenden Kopplungsposition).

Darüber hinaus umfasst die Trageinheit 200 eine mit den wiederaufladbaren Stromspeichern 202 elektrisch leitend verbundene dritte elektrische Schnittstelle 240 (vgl. die Fig. 7 bis 10), welche aufgrund ihrer einfachen Zugänglichkeit zum elektrischen Laden der wiederaufladbaren Stromspeicher 202 vorgesehen ist und bei dem gezeigten Ausführungsbeispiel im Bereich der Unterseite der Trageinheit 200, wie an der Unterseite der Tragstützen ihres Traggestells 201, angeordnet ist. Die dritte elektrische Schnittstelle 240 kann dabei beispielsweise zwei an gegenüberliegenden Tragstützen angeordnete elektrische Kontakte umfassen, welche gegebenenfalls mit einer geeigneten Profilierung, wie einem sich nach unten verjüngenden, im Wesentlichen V- oder U-förmigen Profil (nicht gezeigt), versehen sind, um sie weitestgehend selbstzentrierend in hierzu komplementäre Stromschienen einer Ladestation (siehe hierzu weiter unten) einführen zu können, oder die elektrischen Kontakte können z.B. auch im Wesentlichen eben sein, um sie auf ebene Anschlüsse einer Ladestation aufsetzen zu können und dabei elektrisch zu kontaktieren.

An dem Fluggeräterahmen 101 des autonomen Fluggerätes 100 ist ferner ein nicht zeichnerisch wiedergegebener Behelfsstromspeicher angeordnet, welcher mit den Elektromotoren 103 der Propeller 102 sowie insbesondere auch mit der Steuer- und/oder Regeleinrichtung und mit der Positionserfassungseinrichtung sowie vorzugsweise auch mit den elektromotorischen Antrieben der hin und her bewegbaren ersten Kopplungsmittel 110 der Kopplungseinrichtungen K in elektrisch leitender Verbindung steht, um die vorgenannten Funktionskomponenten auch dann mit Strom zu versorgen, wenn keine mit wiederaufladbaren Stromspeichern 202 bestückte Trageinheit 200 an das autonome Fluggerät 100 gekoppelt worden ist. Der Behelfsstromspeicher des Fluggeräterahmens 101 weist dabei eine (deutlich) geringere Kapazität auf als die wiederaufladbaren Stromspeicher 202 der Trageinheit 200, so dass er keinen nennenswerten Ballast darstellt. Der Behelfsstromspeicher des autonomen Fluggerätes 100 ist zweckmäßigerweise wiederaufladbar und steht zu diesem Zweck mit der ersten elektrischen Schnittstelle 120 des Fluggeräterahmens 101 elektrisch leitend in Verbindung, um ihn gleichfalls mittels der wiederaufladbaren Stromspeicher 202 der Trageinheit 200 aufzuladen, wenn sich die Trageinheit 200 in ihrer an den Fluggeräterahmen 101 des autonomen Fluggerätes 100 gekoppelten Position befindet, in welcher die erste 120 und die zweite elektrische Schnittstelle 220 elektrisch leitend miteinander verbunden sind.

Darüber hinaus kann dem Vorratsbehälter 203 der Trageinheit 200 ein nicht zeichnerisch wiedergegebener Füllstandssensor zugeordnet sein, wie er als solcher aus dem Stand der Technik bekannt ist, welcher zweckmäßigerweise ebenfalls von den wiederaufladbaren Stromspeichern 202 mit Strom versorgt ist und mit der zweiten elektronischen Schnittstelle 230 der Trageinheit 200 in Verbindung steht, um ihn durch Verbinden derselben mit der ersten elektronischen Schnittstelle 130 des Fluggeräterahmens 101 des autonomen Fluggerätes 100 an dessen Steuer- und/oder Regeleinrichtung anzuschließen, wenn sich die Trageinheit 200 in ihrer an den Fluggeräterahmen 101 gekoppelten Position befindet.

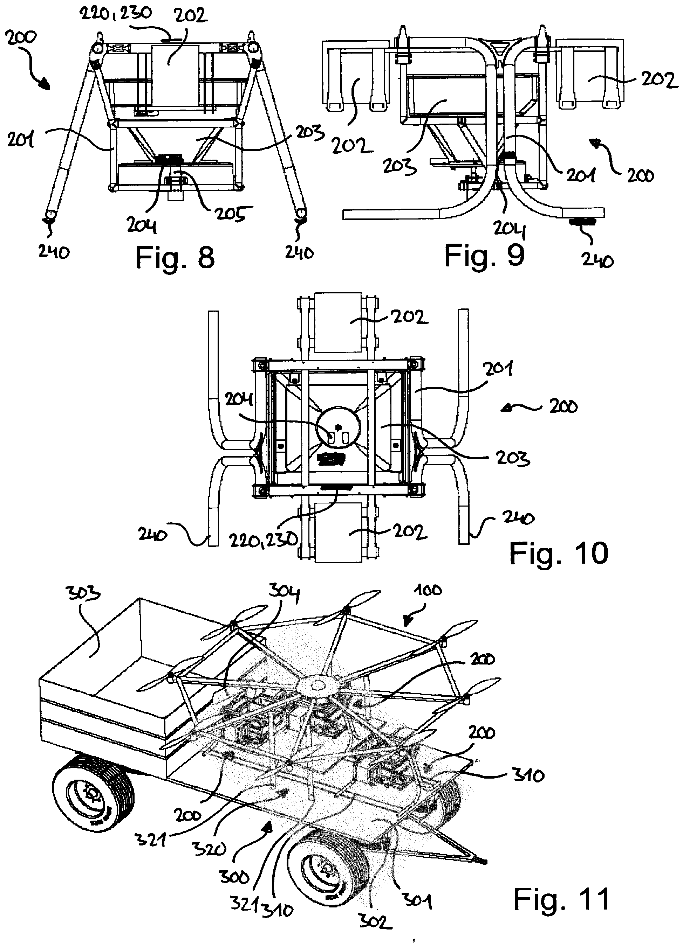

In den Fig. 11 bis 14 ist ein Ausführungsbeispiel einer Befüll- und Ladestation 300 schematisch wiedergegeben, welche sowohl zum automatischen Befüllen des Vorratsbehälters 203 mit Verteilgut als auch zum automatischen elektrischen Aufladen der wiederaufladbaren Stromspeicher 202 der Trageinheit 200 der oben beschriebenen landwirtschaftliche Verteilmaschine geeignet ist, wenn diese mittels des autonomen Fluggerätes 100 dort abgestellt worden ist. Die Befüll- und Ladestation 300, welche gemeinsam mit wenigstens einem autonomen Fluggerät 100 sowie wenigstens zwei Trageinheiten 200, von welchen jeweils eine mit dem autonomen Fluggerät 100 gekoppelt die Verteilarbeit zu verrichten vermag, während jeweils eine andere mittels der Befüll- und Ladestation 300 mit Verteilgut befüllt und mit Strom aufgeladen werden kann, ein erfindungsgemäßes landwirtschaftliches Verteilsystem zum automatisierten Ausbringen von Verteilgut bilden kann, weist im vorliegenden Fall eine Tragplattform 301 zur Aufnahme von mehreren - hier drei - Trageinheiten 200 der Verteilmaschine neben- bzw. hintereinander auf, wobei die Tragplattform 301 am Chassis 302 eines Fahrzeuganhängers angeordnet und folglich mobil ist.

Die Befüll- und Ladestation 300 umfasst ferner einen ebenfalls an dem Chassis 302 an die Tragplattform 301 angrenzend festgelegten Vorratstank 303, welcher im vorliegenden Fall zur Bevorratung von pulver- oder partikelförmigem Verteilgut, wie Dünger, Kalk, Saatgut oder dergleichen, dient und mit einer Befülleinrichtung 304 ausgestattet ist, welche zum Befüllen des Vorratsbehälters 203 einer auf der Tragplattform 301 abgestellten Trageinheit 200 ausgebildet ist, wenn sich die Trageinheit 200 in einer oder mehreren Befüllposition(en) auf der Tragplattform 301 befindet. Die Befülleinrichtung 304 kann sich dabei beispielsweise von dem Vorratstank 303 fort bis oberhalb des Vorratsbehälters 203 zumindest einer dem Vorratstank 303 benachbarten, auf der Tragplattform 302 abgestellten Trageinheit 200 erstrecken, um eine Befüllposition der Trageinheit 200 auf der Tragplattform 302 zu definieren, wobei die Befülleinrichtung 304 eine Fördereinrichtung, z.B. eine in einem Förderrohr motorisch drehangetrieben Förderschnecke, umfassen kann. Der motorische Antrieb steht dabei zweckmäßigerweise mit einer, beispielsweise in der Bordelektronik der Befüll- und Ladestation 300 implementierten, Steuer- und/oder Regeleinrichtung in Verbindung, in welche das Aufnahmevolumen des Vorratsbehälters 203 einer jeweiligen Trageinheit 200 eingebbar ist, so dass letzterer automatisch entsprechend seinem Aufnahmevolumen mit Verteilgut befüllt werden kann. Die Befülleinrichtung 304 kann ferner vorzugsweise entlang der Tragplattform 301 bewegbar, wie z.B. teleskopierbar und/oder Schwenkbar, sein, um eine oder mehrere weitere Befüllpositionen der Trageinheit 200 auf der Tragplattform 301 zur Verfügung zu stellen, wobei die Befülleinrichtung 304 insbesondere im Wesentlichen entlang der gesamten Tragplattform 301 verlagerbar sein kann, um an jedem hierauf vorgesehenen Stellplatz einer Trageinheit 200 zugleich eine Befüllposition zu definieren.

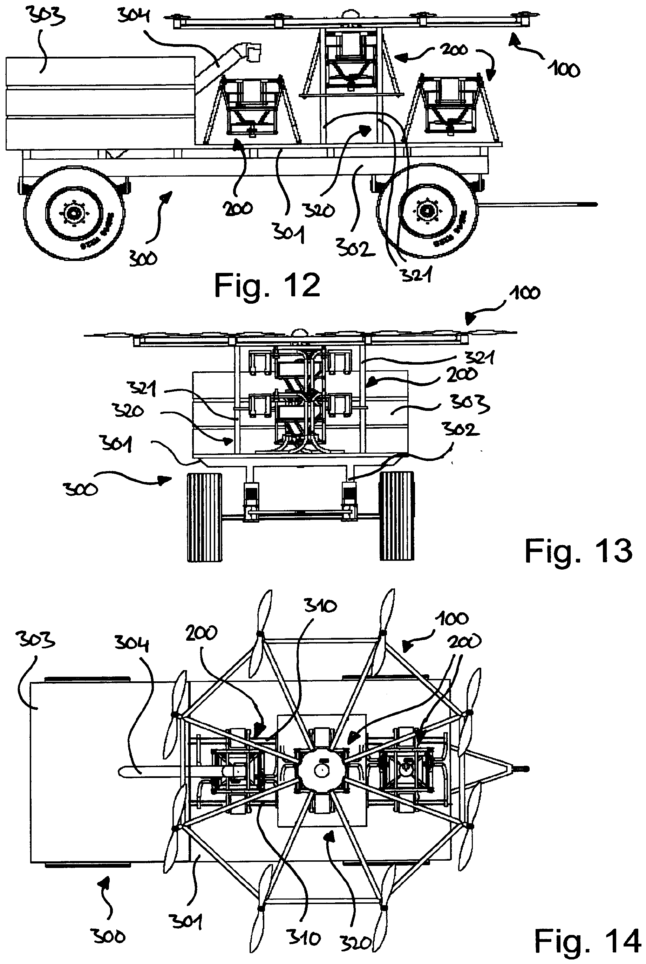

Darüber hinaus umfasst die Befüll- und Ladestation 300 einen nicht zeichnerisch wiedergegebenen Hauptstromspeicher, welcher z.B. von einem üblichen Akkumulator gebildet und vorzugsweise mit einem, beispielsweise mit Benzin, Diesel oder anderen Brennstoffen betriebenen, Stromgenerator (ebenfalls nicht zeichnerisch dargestellt) in Verbindung stehen kann. Der Hauptstromspeicher der Befüll- und Ladestation 300 steht mit einer vierten elektrischen Schnittstelle 310 (vgl. die Fig. 11 und 14) der Befüll- und Ladestation 300 in Verbindung, welche im vorliegenden Fall mit der dritten elektrischen Schnittstelle 240 der der Unterseite der Trageinheit 200 (vgl. hierzu nochmals die Fig. 7 bis 9) elektrisch leitend kontaktierbar ist, wenn sich die Trageinheit 200 in einer Ladeposition auf der Tragplattform 301 befindet. Bei dem gezeigten Ausführungsbeispiel umfasst die vierte elektrische Schnittstelle 310 zu diesem Zweck zwei unter einem dem Abstand der elektrischen Kontakte der dritten elektrischen Schnittstelle 240 der Trageinheit 200 etwa entsprechenden Abstand angeordnete Stromschienen, welche sich insbesondere längs der gesamten Tragplattform 301 an deren Oberseite erstrecken können, so dass ein jeder Stellplatz einer Trageinheit 200 auf der Tragplattform 301 eine Ladeposition definiert und es insbesondere möglich ist, dass zumindest einige oder alle Ladepositionen zugleich als Befüllposition dienen können, um den Vorratsbehälter 203 von hierauf abgestellten Trageinheiten 200 zu befüllen und zugleich deren wiederaufladbare Stromspeicher 202 elektrisch zu laden. Die Stromschienen der vierten elektrischen Schnittstelle 310 der Befüll- und Ladestation 300 sind dabei komplementär zu den elektrischen Kontakten der dritten elektrischen Schnittstelle 240 der Trageinheit ausgestaltet, wobei die elektrischen Schnittstellen 310, 240 beispielsweise mit im Wesentlichen ebenen Flächen oder insbesondere auch mit zueinander komplementären Profilen, wie z.B. einem sich nach oben in Richtung des freien Endes erweiternden V- oder U-Profil der Stromschienen der vierten elektrischen Schnittstelle 310 bzw. einem sich nach unten in Richtung des freien Endes entsprechend verschmälernden V- oder U-Profil der elektrischen Kontakte der dritten elektrischen Schnittstelle 240, versehen sein können, um sie mehr oder minder selbstzentrierend miteinander in elektrisch leitenden Kontakt bringen zu können, wenn eine Trageinheit 200 durch Entkoppeln von dem autonomen Fluggerät 100 auf der Tragplattform 310 der Befüll- und Ladestation 300 abgesetzt wird.

Die Befüll- und Ladestation 300 umfasst überdies wenigstens einen Start- und/oder Landeplatz, an welchem eine hierauf befindliche Trageinheit 200 mit dem Fluggeräterahmen 101 des autonomen Fluggerätes 100 der Verteilmaschine koppelbar und von diesem entkoppelbar ist. Im vorliegenden Fall kann beispielsweise der dem Vorratstank 303 ferne Stellplatz oder die beiden dem Vorratstank 303 fernen Stellplätze der Trageinheiten 200 auf der Tragplattform 301 als Start- und/oder Landeplatz dienen, wobei der (jeweilige) Start- und/oder Landeplatz mit (je) einer, z.B. eine Mehrzahl an teleskopierbaren Hubstützen 321 umfassenden, Hubeinrichtung 320 ausgestattet sein kann, welche zum Anheben einer hierauf befindlichen Trageinheit 200 auf ein Niveau oberhalb der Tragplattform 301 und zum Absenken der Trageinheit 200 auf die Tragplattform 301 ausgebildet ist, um das Starten und Landen des mit einer Trageinheit 200 bestückten autonomen Fluggerätes 100 zu erleichtern. Aufgrund der sich längs der gesamten Tragplattform 301 einschließlich des bzw. der Start- und/oder Landeplatz bzw. -plätze erstreckenden vierten elektrischen Schnittstelle 310 der Befüll- und Ladestation 300 ist der bzw. sind die Start- und/oder Landeplatz bzw. -plätze zugleich an je einer Ladeposition der Tragplattform 301 angeordnet, um die wiederaufladbaren Stromspeicher 202 einer hierauf abgestellten Trageinheit 200 laden zu können. Entsprechendes gilt im Falle einer entlang der gesamten Tragplattform 301 bewegbaren Befülleinrichtung 304 in Bezug auf die Befüllposition.

Sofern die Tragplattform 301 der Befüll- und Ladestation, z.B. aufgrund kleiner Baugröße, nur einen Start- und/ oder Landeplatz umfasst, an welchem das autonome Fluggerät 100 folglich sowohl eine "leere" Trageinheit 200 abstellen als auch eine "volle" Trageinheit 200 aufnehmen muss, kann die Tragplattform 301 bewegbar oder mit einer Fördereinrichtung (jeweils nicht gezeigt) ausgestattet sein, um eine hierauf befindliche Trageinheit 200 zwischen der Befüllposition und/oder der Ladeposition und dem Start- und/oder Landeplatz hin und her zu bewegen, so dass das autonome Fluggerät 100 die "leere" Trageinheit 200 an einem und demselben Start- und Landeplatz gegen eine "volle" Trageinheit 200 auszutauschen vermag und die "leere" Trageinheit 200 außerhalb dieses Start- und Landeplatzes wieder sowohl mit Verteilgut als auch mit Strom versehen werden kann.

## Patentansprüche

1. Landwirtschaftliche Verteilmaschine zum automatisierten Ausbringen von Verteilgütern, umfassend ein autonomes Fluggerät (100) mit einer Mehrzahl von an einem Fluggeräterahmen (101) drehbar gelagerten und elektromotorisch (103) angetriebenen Propellern (102), wenigstens einem wiederaufladbaren Stromspeicher (202), einer Positionserfassungseinrichtung, einer Steuer- und/oder Regeleinrichtung, wenigstens einem Vorratsbehälter (203), wenigstens einem Dosierorgan (204) und wenigstens einem Verteilorgan (205), **dadurch gekennzeichnet, dass**
- einerseits der Vorratsbehälter (203), das wenigstens eine Dosierorgan (204) und das wenigstens eine Verteilorgan (205), andererseits der wenigstens eine wiederaufladbare Stromspeicher (202) an einer separaten Trageinheit (200) angeordnet sind;
- die Trageinheit (200) mittels wenigstens einer automatischen Kopplungseinrichtung (K) mit dem Fluggeräterahmen (101) koppelbar und von diesem entkoppelbar ist; und
- der Fluggeräterahmen (101) eine erste elektrische Schnittstelle (120) aufweist, welche mit den Elektromotoren (103) der Propeller (102) in Verbindung steht, die Trageinheit (200) eine zweite elektrische Schnittstelle (220) aufweist, welche mit dem wenigstens einen wiederaufladbaren Stromspeicher (202) in Verbindung steht, wobei die erste (120) und die zweite elektrische Schnittstelle (220) elektrisch leitend miteinander verbunden sind, wenn sich die Trageinheit (200) in ihrer an den Fluggeräterahmen (101) gekoppelten Position befindet.

2. Verteilmaschine nach Anspruch 1, **dadurch gekennzeichnet, dass** die Trageinheit (200) ein selbsttragendes Traggestell (201) umfasst, welches insbesondere zum Abstellen der Trageinheit (200) auf dem Untergrund ausgebildet ist.

3. Verteilmaschine nach Anspruch 1 oder 2, **dadurch gekennzeichnet, dass**
- die wenigstens eine automatische Kopplungseinrichtung (K) selbstzentrierend ist, um die erste elektrische Schnittstelle (120) beim Ankoppeln der Trageinheit (200) an den Fluggeräterahmen (101) selbsttätig mit der zweiten elektrischen Schnittstelle (120) zu verbinden; und/oder
- wenigstens zwei, insbesondere wenigstens drei, mit Abstand voneinander angeordnete automatische Kopplungseinrichtungen (K) vorgesehen sind.

4. Verteilmaschine nach einem der Ansprüche 1 bis 3, **dadurch gekennzeichnet, dass** die Kopplungseinrichtung (K)
- am Fluggeräterahmen (101) angeordnete und zwischen einer Kopplungsposition und einer Entkopplungsposition hin und her bewegbare erste Kopplungsmittel (110) aufweist, welche mit hierzu komplementären zweiten Kopplungsmitteln (210) an der Trageinheit (200) in Eingriff und außer Eingriff bringbar sind; oder
- an der Trageinheit (200) angeordnete und zwischen einer Kopplungsposition und einer Entkopplungsposition hin und her bewegbare zweite Kopplungsmittel aufweist, welche mit hierzu komplementären ersten Kopplungsmitteln an dem Fluggeräterahmen (101) in Eingriff und außer Eingriff bringbar sind.

5. Verteilmaschine nach einem der Ansprüche 1 bis 4, **dadurch gekennzeichnet, dass** an dem Fluggeräterahmen (101) ferner ein Behelfsstromspeicher angeordnet ist, welcher mit den Elektromotoren (103) der Propeller (102) in Verbindung steht, wobei der Behelfsstromspeicher des Fluggeräterahmens (101) insbesondere eine geringere Kapazität aufweist als der wenigstens eine wiederaufladbare Stromspeicher (202) der Trageinheit (200).

6. Verteilmaschine nach Anspruch 5, **dadurch gekennzeichnet, dass** der Behelfsstromspeicher wiederaufladbar ist, wobei er insbesondere mit der ersten elektrischen Schnittstelle (120) des Fluggeräterahmens (101) elektrisch leitend in Verbindung steht, um ihn mittels des wenigstens eines wiederaufladbaren Stromspeichers (202) der Trageinheit (200) aufzuladen, wenn sich die Trageinheit (200) in ihrer an den Fluggeräterahmen (101) gekoppelten Position befindet, in welcher die erste (120) und die zweite elektrische Schnittstelle (220) elektrisch leitend miteinander verbunden sind.

7. Verteilmaschine nach einem der Ansprüche 1 bis 6, **dadurch gekennzeichnet, dass** der Fluggeräterahmen (101) ferner eine erste elektronische Schnittstelle (130) aufweist, welche mit der Steuer- und/oder Regeleinrichtung in Verbindung steht, die Trageinheit (200) eine zweite elektronische Schnittstelle (230) aufweist, welche zumindest mit dem wenigstens einen Dosierorgan (204) und insbesondere auch mit dem wenigstens einen Verteilorgan (205) in Verbindung steht, wobei die erste (130) und die zweite elektronische Schnittstelle (230) elektrisch leitend miteinander verbunden sind, wenn sich die Trageinheit (200) in ihrer an den Fluggeräterahmen (101) gekoppelten Position befindet, wobei die erste (130) und zweite elektronischen Schnittstellen (239) insbesondere in die ersten (120) und zweiten elektrischen Schnittstellen (130) integriert sind.

8. Verteilmaschine nach einem der Ansprüche 1 bis 7, **dadurch gekennzeichnet, dass** die Trageinheit (200) eine mit dem wenigstens einen wiederaufladbaren Stromspeicher (202) elektrisch leitend verbundene dritte elektrische Schnittstelle (240) aufweist, welche zum elektrischen Laden des wenigstens einen wiederaufladbaren Stromspeichers (202) dient, wobei die dritte elektrische Schnittstelle (240) insbesondere im Bereich der Unterseite der Trageinheit (200) angeordnet ist.

9. Verteilmaschine nach einem der Ansprüche 1 bis 8, **dadurch gekennzeichnet, dass** der Vorratsbehälter (203) zur Aufnahme von pulver- und/oder partikelförmigem Verteilgut, wie Dünger, Kalk, Saatgut und dergleichen, ausgebildet ist und das wenigstens eine Dosierorgan (204) ein(en) unterhalb des Vorratsbehälters (203) angeordneten Dosierschieber oder Dosierrad aufweist, wobei das wenigstens eine Verteilorgan (205) insbesondere eine drehangetriebene Verteilerscheibe aufweist.

10. Verteilmaschine nach Anspruch 9, **dadurch gekennzeichnet, dass** die Trageinheit (200) zwei, insbesondere unabhängig voneinander betätigbare, Dosierorgane (204) sowie zwei, insbesondere unabhängig voneinander drehangetriebene, Verteilorgane (205) in Form von Verteilerscheiben umfasst, wobei sie ferner insbesondere zwei Einrichtungen zur Verstellung des Aufgabepunktes des Verteilgutes auf die jeweilige Verteilerscheibe aufweist.

11. Befüll- und Ladestation (300), welche sowohl zum Befüllen des Vorratsbehälters (203) mit Verteilgut als auch zum elektrischen Aufladen des wenigstens einen wiederaufladbaren Stromspeichers (202) der Trageinheit (200) einer landwirtschaftlichen Verteilmaschine nach einem der Ansprüche 1 bis 10 geeignet ist, umfassend
- eine, insbesondere mobile, Tragplattform (301) zur Aufnahme von wenigstens zwei Trageinheiten (200) der Verteilmaschine;
- einen Vorratstank (303) zur Bevorratung von Verteilgut mit einer Befülleinrichtung (304), welche zum Befüllen des Vorratsbehälters (203) einer Trageinheit (200) der Verteilmaschine ausgebildet ist, wenn sich die Trageinheit (200) in wenigstens einer Befüllposition auf der Tragplattform (301) befindet;
- einen Hauptstromspeicher, welcher mit einer vierten elektrischen Schnittstelle (310) der Befüll- und Ladestation (300) in Verbindung steht, wobei die vierte elektrische Schnittstelle (310) mit der zweiten elektrischen Schnittstelle (220) oder mit der dritten elektrischen Schnittstelle (240) gemäß Anspruch 8 der Trageinheit (200) elektrisch leitend kontaktierbar ist, wenn sich die Trageinheit (200) in wenigstens einer Ladeposition auf der Tragplattform (301) befindet; und
- wenigstens einen Start- und/oder Landeplatz, an welchem eine hierauf befindliche Trageinheit (200) mit dem Fluggeräterahmen (101) des autonomen Fluggerätes (100) der Verteilmaschine koppelbar und von diesem entkoppelbar ist.

12. Befüll- und Ladestation nach Anspruch 11, **dadurch gekennzeichnet, dass**
- die Ladeposition mit der Befüllposition identisch ist, um den Vorratsbehälter (203) einer hierauf befindlichen Trageinheit (200) zu befüllen und zugleich deren wenigstens einen wiederaufladbaren Stromspeicher (202) zu laden; und/oder
- der Start- und/oder Landeplatz an der Ladeposition angeordnet ist, um den wenigstens einen wiederaufladbaren Stromspeicher (202) einer hierauf abgestellten Trageinheit (200) zu laden.

13. Befüll- und Ladestation nach Anspruch 11 oder 12, **dadurch gekennzeichnet, dass** die Tragplattform (301) bewegbar oder mit einer Fördereinrichtung ausgestattet ist, um eine hierauf befindliche Trageinheit (200) zwischen der Befüllposition und/oder der Ladeposition und dem Start- und/oder Landeplatz hin und her zu bewegen.

14. Befüll- und Ladestation nach einem der Ansprüche 11 bis 13, **dadurch gekennzeichnet, dass** die Befülleinrichtung (304) entlang der Tragplattform (301) bewegbar ist, um mehrere Befüllpositionen der Tragplattform (304) zur Verfügung zu stellen.

15. Befüll- und Ladestation nach einem der Ansprüche 11 bis 14, **dadurch gekennzeichnet, dass** der Start- und/oder Landeplatz eine Hubeinrichtung (320) aufweist, welche zum Anheben einer hierauf befindlichen Trageinheit (200) auf ein Niveau oberhalb der Tragplattform (301) und zum Absenken der Trageinheit (200) im Wesentlichen auf das Niveau der Tragplattform (301) ausgebildet ist.

16. Befüll- und Ladestation nach einem der Ansprüche 11 bis 15, **dadurch gekennzeichnet, dass** sie ferner einen mit dem Hauptstromspeicher in Verbindung stehenden Stromgenerator aufweist.

17. Befüll- und Ladestation nach einem der Ansprüche 11 bis 16, **dadurch gekennzeichnet, dass** die Befülleinrichtung (304) eine sich bis oberhalb des Vorratsbehälters (202) einer in der Befüllposition befindlichen Trageinheit (200) erstreckende Fördereinrichtung aufweist, welche insbesondere mit einer Steuer- und/oder Regeleinrichtung in Verbindung steht, in welche das Aufnahmevolumen des Vorratsbehälters der Trageinheit (200) eingebbar ist.

18. Landwirtschaftliches Verteilsystem zum automatisierten Ausbringen von Verteilgütern, umfassend
- wenigstens eine landwirtschaftliche Verteilmaschine nach einem der Ansprüche 1 bis 10 mit wenigstens einem autonomen Fluggerät (100) und wenigstens zwei Trageinheiten (200); und
- wenigstens eine Befüll- und Ladestation (300) nach einem der Ansprüche 11 bis 17.

## Claims

1. Agricultural distributor for the automated distribution of materials to be distributed, comprising an autonomous aircraft (100) with a multiplicity of propellers (102) which are rotatably mounted on an aircraft frame (101) and driven by electric motor (103), at least one rechargeable power store (202), a position-detection device, a control and/or regulating device, at least one reservoir container (203), at least one metering element (204) and at least one distribution element (205), **characterized in that**
- on the one hand the reservoir container (203), the at least one metering element (204) and the at least one distribution element (205), and on the other hand at least one re-chargeable power store (202) are arranged on a separate carrier unit (200);
- the carrier unit (200) can be coupled, by means of at least one automatic coupling device (K), to the aircraft frame (101) and decoupled therefrom; and
- the aircraft frame (101) has a first electrical interface (120) which is connected to the electric motors (103) of the propellers (102), the carrier unit (200) has a second electrical interface (220) which is connected to the at least one re-chargeable power store (202), wherein the first electrical interface (120) and the second electrical interface (220) are connected to one another in an electrically conductive fashion when the carrier unit (200) is in its position in which it is coupled to the aircraft frame (101).

2. Distributor according to Claim 1, **characterized in that** the carrier unit (200) comprises a self-supporting carrier frame (201) which is designed, in particular, to set down the carrier unit (200) on the underlying surface.

3. Distributor according to Claim 1 or 2, **characterized in that**
- the at least one automatic coupling device (K) is self-centring, in order to connect the first electrical interface (120) automatically to the second electrical interface (120) when the carrier unit (200) is coupled to the aircraft frame (101); and/or
- at least two, in particular at least three, automatic coupling devices (K) which are arranged at a distance from one another are provided.

4. Distributor according to one of Claims 1 to 3, **characterized in that** the coupling device (K) has
- first coupling means (110) which are arranged on the aircraft frame (101) and can be moved to and fro between a coupling position and an uncoupling position and which can be engaged with second coupling means (210), complementary to said first coupling means (110), on the carrier unit (200) and disengaged therefrom; or
- has second coupling means which are arranged on the carrier unit (200) and can be moved to and fro between a coupling position and an uncoupling position and which can be engaged with first coupling means, complementary with respect to said second coupling means, on the aircraft frame (101) and disengaged therefrom.

5. Distributor according to one of Claims 1 to 4, **characterized in that** in addition an auxiliary power store, which is connected to the electric motors (103) of the propellers (102), arranged on the aircraft frame (101), wherein the auxiliary power store of the aircraft frame (101) has, in particular, a lower capacity than the at least one re-chargeable power store (202) of the carrier unit (200).

6. Distributor according to Claim 5, **characterized in that**
the auxiliary power store is re-chargeable, wherein it is connected in an electrically conductive fashion, in particular, to the first electrical interface (120) of the aircraft frame (101), in order to charge it by means of the at least one re-chargeable power store (202) of the carrier unit (200) when the carrier unit (200) is in its position in which it is coupled to the aircraft frame (101) and in which the first electrical interface (120) and the second electrical interface (220) are connected to one another in an electrically conductive fashion.

7. Distributor according to one of Claims 1 to 6, **characterized in that** the aircraft frame (101) additionally has a first electronic interface (130) which is connected to the control and/or regulating device, the carrier unit (200) has a second electronic interface (230) which is connected at least to the at least one metering element (204) and, in particular, also to the at least one distribution element (205), wherein the first electronic interface (130) and the second electronic interface (230) are connected to one another in an electrically conductive fashion when the carrier unit (200) is in its position in which it is coupled to the aircraft frame (101), wherein the first electronic interface (130) and the second electronic interface (239) are, in particular, integrated into the first electrical interface (120) and the second electrical interface (130).

8. Distributor according to one of Claims 1 to 7, **characterized in that** the carrier unit (200) has a third electrical interface (240) which is connected in an electrically conductive fashion to the at least one re-chargeable power store (202) and which serves to electrically charge the at least one re-chargeable power store (202), wherein the third electrical interface (240) is arranged, in particular, in the region of the underside of the carrier unit (200).

9. Distributor according to one of Claims 1 to 8, **characterized in that** the reservoir container (203) is designed to hold powderous and/or particular material for distribution, such as fertilizer, lime, seeds and the like, and the at least one metering element (204) has a metering disc or metering wheel arranged underneath the reservoir container (203), wherein the at least one distribution element (205) has, in particular, a rotationally driven distributor disc.

10. Distributor according to Claim 9, **characterized in that** the carrier unit (200) comprises two metering elements (204) which, in particular, can be activated independently of one another, and two distribution elements (205) which are in the form of distributor discs which, in particular, are rotationally driven independently of one another, wherein said distributor additionally has, in particular, two devices for adjusting the application point of the material for distribution onto the respective distributor disc.

11. Filling and charging station (300) which is suitable both for filling the reservoir container (203) with material for distribution and for electrically charging the at least one rechargeable power store (202) of the carrier unit (200) of an agricultural distributor according to one of Claims 1 to 10, comprising
- an, in particular, mobile, carrier platform (301) for holding at least two carrier units (200) of the distributor;
- a reservoir tank (303) for storing material for distribution with a filling device (304) which is designed to fill the reservoir container (203) of a carrier unit (200) of the distributor when the carrier unit (200) is in at least one filling position on the carrier platform (301);
- a main power store which is connected to a fourth electrical interface (310) of the filling and charging station (300), wherein the fourth electrical interface (310) can be placed in contact in an electrically conductive fashion with the second electrical interface (220) or with the third electrical interface (240) according to Claim 8 of the carrier unit (200) when the carrier unit (200) is in at least one charging position on the carrier platform (301); and
- at least one take-off and/or landing site, at which a carrier unit (200) which is located thereon can be coupled to the aircraft frame (101) of the autonomous aircraft (100) of the distributor and can be uncoupled therefrom.

12. Filling and charging station according to Claim 11, **characterized in that**
- the charging position is identical to the filling position, in order to fill the reservoir container (203) of a carrier unit (200) located thereon and at the same time to charge the at least one re-chargeable power store (202) of said carrier unit (200); and/or
- the take-off and/or landing site is arranged at the charging position, in order to charge the at least one re-chargeable power store (202) of a carrier unit (200) which has been set down thereon.

13. Filling and charging station according to Claim 11 or 12, **characterized in that** the carrier platform (301) is movable or is equipped with a conveyor device, in order to move a carrier unit (200) located thereon to and fro between the filling position and/or the charging position and the take-off and/or landing site.

14. Filling and charging station according to one of Claims 11 to 13, **characterized in that** the filling device (304) can be moved along the carrier platform (301), in order to make available a plurality of filling positions of the carrier platform (304).

15. Filling and charging station according to one of Claims 11 to 14, **characterized in that** the take-off and/or landing site has a lifting device (320) which is designed to lift a carrier unit (200) located thereon to a level above the carrier platform (301) and to lower the carrier unit (200) essentially to the level of the carrier platform (301) .

16. Filling and charging station according to one of Claims 11 to 15, **characterized in that** it additionally has a power generator which is connected to the main power store.

17. Filling and charging station according to one of Claims 11 to 16, **characterized in that** the filling device (304) has a conveyor device which extends above the reservoir container (202) of a carrier unit (200) which is in the filling position, which conveyor device is connected, in particular, to a control and/or regulating device into which the volumetric capacity of the carrier unit (200) can be input.

18. Agricultural distribution system for the automated distribution of materials for distribution, comprising
- at least one agricultural distributor according to one of Claims 1 to 10 with at least one autonomous aircraft (100) and at least two carrier units (200); and
- at least one filling and charging station (300) according to one of Claims 11 to 17.

## Revendications

1. Machine d'épandage agricole pour la pulvérisation automatisée de produits à épandre, comprenant un engin volant autonome (100) avec une pluralité d'hélices (102) disposées de façon pivotante au niveau d'un cadre d'engin volant (101) et entraînées de façon électromotorisée (103), avec au moins un accumulateur de courant (202) rechargeable, avec un dispositif de détermination de position, un dispositif de commande et/ou de réglage, au moins un réservoir (203), au moins un organe de dosage (204) et au moins un organe d'épandage (205), **caractérisée en ce que** :
- d'une part le réservoir (203), l'au moins un organe de dosage (204) et l'au moins un organe d'épandage (205), d'autre part l'au moins un accumulateur de courant (202) rechargeable sont disposés au niveau d'une unité portante (200) séparée ;
- l'unité portante (200) pouvant être couplée au cadre d'engin volant (101) à l'aide d'au moins un dispositif de couplage (K) automatique et pouvant en être découplée ; et
- le cadre d'engin volant (101) comportant une première interface électrique (120) reliée aux moteurs électriques (103) des hélices (102), l'unité portante (200) comportant une deuxième interface électrique (220) reliée à l'au moins un accumulateur de courant (202) rechargeable, la première (120) et la deuxième interface électrique (220) étant reliées entre elles de façon électriquement conductrice lorsque l'unité portante (200) se trouve dans sa position couplée au niveau du cadre d'engin volant (101).

2. Machine d'épandage selon la revendication 1, **caractérisée en ce que** l'unité portante (200) comprend un châssis porteur (201) autoporteur réalisé notamment pour poser l'unité portante (200) sur le support.

3. Machine d'épandage selon la revendication 1 ou 2, **caractérisée en ce que** :
- l'au moins un dispositif de couplage automatique (K) est autocentré pour relier automatiquement la première interface électrique (120) à la deuxième interface électrique (120) lors du couplage de l'unité portante (200) au niveau du cadre d'engin volant (101) ; et/ou
- au moins deux, notamment au moins trois, dispositifs de couplage (K) automatiques disposés à une certaine distance les uns des autres sont prévus.

4. Machine d'épandage selon l'une quelconque des revendications 1 à 3, **caractérisée en ce que** le dispositif de couplage (K) :
- est disposé au niveau du cadre d'engin volant (101) et des premiers moyens de couplage (110) pouvant effectuer un mouvement de va-et-vient entre une position de couplage et une position de découplage, lesdits moyens de couplage pouvant être amenés en prise et hors prise avec des deuxièmes moyens de couplage (210) complémentaires au niveau de l'unité portante (200) ; ou
- est disposé au niveau de l'unité portante (200) et comporte des deuxièmes moyens de couplage pouvant effectuer un mouvement de va-et-vient entre une position de couplage et une position de découplage, lesdits moyens de couplage pouvant être amenés en prise et hors prise avec les premiers moyens de couplage complémentaires au niveau du cadre d'engin volant (101).

5. Machine d'épandage selon l'une quelconque des revendications 1 à 4, **caractérisée en ce qu'**un accumulateur de courant de secours est en outre disposé au niveau du cadre d'engin volant (101), ledit accumulateur de courant étant relié aux moteurs électriques (103) des hélices (102), l'accumulateur de courant de secours du cadre d'engin volant (101) comportant notamment une capacité plus réduite que l'au moins un accumulateur de courant (202) rechargeable de l'unité portante (200).

6. Machine d'épandage selon la revendication 5, **caractérisée en ce que** l'accumulateur de courant de secours est rechargeable et est notamment relié de façon électriquement conductrice à la première interface électrique (120) du cadre d'engin volant (101) pour le charger à l'aide de l'au moins un accumulateur de courant (202) rechargeable de l'unité portante (200) lorsque l'unité portante (200) se trouve dans sa position couplée au cadre d'engin volant (101) dans laquelle la première (120) et la deuxième interface électrique (220) sont reliées entre elles de façon électriquement conductrice.

7. Machine d'épandage selon l'une quelconque des revendications 1 à 6, **caractérisée en ce que** le cadre d'engin volant (101) comporte en outre une première interface électronique (130) reliée au dispositif de commande et/ou de réglage, que l'unité portante (200) comporte une deuxième interface électronique (230) reliée au moins à au moins un organe de dosage (204) et notamment également à l'au moins un organe d'épandage (205), la première (130) et la deuxième interface électronique (230) étant reliées entre elles de façon électriquement conductrice lorsque l'unité portante (200) se trouve dans sa position couplée au cadre d'engin volant (101), les première (130) et deuxième interfaces électroniques (239) étant notamment intégrées dans les première (120) et deuxième interfaces électriques (130).

8. Machine d'épandage selon l'une quelconque des revendications 1 à 7, **caractérisée en ce que** l'unité portante (200) comporte une troisième interface électrique (240) reliée de façon électriquement conductrice à l'au moins un accumulateur de courant (202) rechargeable servant à recharger l'au moins un accumulateur de courant (202) rechargeable, la troisième interface électrique (240) étant notamment disposée dans la région du côté inférieur de l'unité portante (200).

9. Machine d'épandage selon l'une quelconque des revendications 1 à 8, **caractérisée en ce que** le réservoir (203) est réalisé de façon à pouvoir recevoir le produit à épandre sous forme de poudre et/ou de particules, tel que de l'engrais, de la chaux, des semences et leur équivalent et que l'au moins un organe de dosage (204) comporte un poussoir de dosage ou une roue de dosage disposés en dessous du réservoir (203), l'au moins un organe d'épandage (205) comportant notamment un disque d'épandage entraîné en rotation.

10. Machine d'épandage selon la revendication 9, **caractérisée en ce que** l'unité portante (200) comprend deux organes de dosage (204), notamment actionnables indépendamment l'un de l'autre, ainsi que deux organes d'épandage (205) entraînés en rotation notamment disposés indépendamment l'un de l'autre sous la forme de disques d'épandage, ladite machine comportant en outre notamment deux dispositifs de réglage du point cible du produit d'épandage sur le disque d'épandage respectif.

11. Station de remplissage et de charge (300), adaptée tant pour remplir le réservoir (203) avec un produit d'épandage que pour charger électriquement l'au moins un accumulateur de courant (202) rechargeable de l'unité portante (200) d'une machine d'épandage agricole selon l'une quelconque des revendications 1 à 10, comprenant :
- une plateforme portante (301) notamment mobile servant à loger au moins deux unités portantes (200) de la machine d'épandage ;
- un réservoir (303) pour le stockage de produit d'épandage avec un dispositif de remplissage (304) réalisé pour remplir le réservoir (203) d'une unité portante (200) de la machine d'épandage lorsque l'unité portante (200) se trouvant sur la plateforme portante (301) est dans au moins une position de remplissage ;
- un accumulateur de courant principal relié à une quatrième interface électrique (310) de la station de remplissage et de charge (300), la quatrième interface électrique (310) pouvant être mise en contact de façon électriquement conductrice avec la deuxième interface électrique (220) ou avec la troisième interface électrique (240), selon la revendication 8, de l'unité portante (200) lorsque l'unité portante (200) se trouve sur la plateforme portante (301) dans au moins une position de charge ; et
- au moins une position de décollage et/ou d'atterrissage au niveau de laquelle une unité portante (200) se trouvant dessus peut être couplée au cadre d'engin volant (101) de l'engin volant autonome (100) de la machine d'épandage et être découplée de celui-ci.

12. Station de remplissage et de charge selon la revendication 11, **caractérisée en ce que** :
- la position de charge est identique à la position de remplissage pour remplir le réservoir (203) d'une unité portante (200) se trouvant dessus et pour charger simultanément l'au moins un accumulateur de courant (202) rechargeable ; et/ou
- la position de décollage et/ou d'atterrissage est disposée au niveau de la position de charge, pour charger l'au moins un accumulateur de courant (202) rechargeable d'une unité portante (200) posée dessus.

13. Station de remplissage et de charge selon la revendication 11 ou 12, **caractérisée en ce que** la plateforme portante (301) est mobile ou est équipée d'un dispositif de transport pour déplacer selon un mouvement de va-et-vient une unité portante (200) se trouvant dessus entre la position de remplissage et/ou la position de charge et la position de décollage et/ou d'atterrissage.

14. Station de remplissage et de charge selon l'une quelconque des revendications 11 à 13, **caractérisée en ce que** le dispositif de remplissage (304) est mobile le long de la plateforme portante (301) pour mettre à disposition plusieurs positions de remplissage de la plateforme portante (304).

15. Station de remplissage et de charge selon l'une quelconque des revendications 11 à 14, **caractérisée en ce que** la position de décollage et/ou d'atterrissage comporte un dispositif de levée (320) réalisé pour soulever une unité portante (200) se trouvant dessus sur un niveau au-dessus de la plateforme portante (301) et pour abaisser l'unité portante (200) pour l'essentiel au niveau de la plateforme portante (301).

16. Station de remplissage et de charge selon l'une quelconque des revendications 11 à 15, **caractérisée en ce qu'**elle comporte en outre un générateur de courant relié à l'accumulateur de courant principal.

17. Station de remplissage et de charge selon l'une quelconque des revendications 11 à 16, **caractérisée en ce que** le dispositif de remplissage (304) comporte un dispositif de transport s'étendant jusqu'à au-dessus du réservoir (202) d'une unité portante (200) se trouvant dans la position de remplissage, ledit dispositif de transport étant notamment relié à un dispositif de commande et/ou de réglage dans lequel la capacité du réservoir de l'unité portante (200) peut être entrée.

18. Système d'épandage agricole pour la pulvérisation automatisée de produits à épandre, comprenant :
- au moins une machine d'épandage agricole selon l'une quelconque des revendications 1 à 10 avec au moins un engin volant autonome (100) et au moins deux unités portantes (200) ; et
- au moins une station de remplissage et de charge (300) selon l'une quelconque des revendications 11 à 17.
